Europäisches Patentamt

(19) **European Patent Office**

Office européen des brevets

(11) Veröffentlichungsnummer: **0 086 275
B1**

(12) # EUROPÄISCHE PATENTSCHRIFT

(45) Veröffentlichungstag der Patentschrift:
**19.11.87**

(51) Int. Cl.⁴: **G 11 B 23/02**

(21) Anmeldenummer: **82111937.7**

(22) Anmeldetag: **23.12.82**

(54) **Behälter zur Aufbewahrung von Magnetbandkassetten oder anderen Aufzeichnungsträgern.**

(30) Priorität: **20.01.82 DE 3201486**

(43) Veröffentlichungstag der Anmeldung:
**24.08.83 Patentblatt 83/34**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**DE - A - 2 343 487
DE - A - 2 729 492
DE - C - 373 396
DE - C - 2 248 408
DE - U - 7 917 351
GB - A - 2 077 234
US - A - 4 084 865**

(73) Patentinhaber: **idn inventions and development of novelties ag, Hartbertstrasse 9, CH-7002 Chur (CH)**

(72) Erfinder: **Ackeret, Peter, Allmendstrasse 18, CH-8700 Küsnacht (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

ACTORUM AG

**Beschreibung**

Die Erfindung betrifft einen Behälter zur Aufbewahrung von Aufzeichnungsträgern. Eine grosse Anzahl solcher Behälter sind für die handelsüblichen Tonband- und Kompaktkassetten bekannt, und es ist hier auf die folgenden Druckschriften zu verweisen: DE-PS 2 248 408 und DE-PS 2 521 371.

Die bekannten Behälter weisen die in dem Oberbegriff des Patentanspruchs 1 genannten Merkmale auf.

Neben den handelsüblichen Tonbandkassetten finden auch Magnetbandkassetten mehr und mehr Verbreitung, die zur Aufzeichnung von Bild- und Tonsignalen bestimmt und geeignet sind und nachfolgend als Video-Kassetten bezeichnet werden sollen. Für solche Kassetten hat sich noch keine Bauart definitiv durchgesetzt, und abgesehen von ihrer im allgemeinen rechteckigen Grundform unterscheiden sie sich untereinander erheblich, auch hinsichtlich ihrer Abmessungen. Gemeinsam ist ihnen freilich, dass sie mehr noch als Kompaktkassetten empfindlich gegen rauhe Behandlung und Staub sind. Es ist demgemäss ein Bedürfnis nach einem zweckmässigen Aufbewahrungsbehälter gegeben. Wie grundsätzlich bei Aufbewahrungssystemen, gilt auch hier die Forderung, dass der Behälter selbst so wenig Platz wie möglich beanspruchen sollte, preisgünstig zu fertigen ist und möglichst modular ausgebildet sein soll, d.h. dass untereinander gleiche Behälter miteinander zu Archiven kombiniert sein sollten. Eine weitere Forderung ergibt sich daraus, dass ein solches Archiv einen gegebenen Raum möglichst gut ausnutzen soll, wobei die Tiefe üblicher Regale weitgehend der grössten Längenabmessung von Videokassetten entspricht. Und schliesslich versteht es sich beinahe von selbst, dass die Handhabung der Behälter, dass heisst das Entnehmen und Einlegen der Kassetten, für den Benutzer einfach und bequem sein soll; aufgrund der gegenüber Kompaktkassetten erheblich grösseren Abmessungen von Videokassetten bedeutet dies unter anderem, dass dabei die Kassette an ihren Breitseiten erfassbar sein sollte.

Aus der DE-A-2 729 492 ist ein Behälter zum Aufbewahren von Musik-Kassetten bekannt, bei dem ein Kasten als Aussengehäuse einen um eine gewisse Distanz aus dem Kasten herausbewegbaren Einsatz aufnimmt. Die offene Schmalseite des Kastens ist durch einen am Kasten angelenkten Deckel verschliessbar, der seinerseits wieder über ein Gestänge oder dergleichen derart mit dem Einsatz gekoppelt ist, dass beim Aufklappen des Deckels zugleich der Einsatz ein Stück aus dem Kasten herausbewegt wird.

Neben Videorecordern verfügen viele Haushalte auch über Schallwiedergabegeräte, wobei insbesondere für die sogenannten «Compactdiscs» oder Kompaktschallplatten wegen deren gegenüber herkömmlichen Platten oder Kassetten erheblich günstigerer Eigenschaften eine grosse Zukunft zu erwarten ist. Auch für diese Medien oder Aufzeichnungsträger stellt sich das Problem der Unterbringung und Handhabung, und da die beiden hier besonders angesprochenen Aufzeichnungsträger voraussichtlich nicht alternativ, sondern nebeneinander vorhanden sein werden, wäre es erwünscht, Behälter zur Verfügung zu haben, die bei äusserlich gleicher Gestaltung wahlweise an das eine oder andere Aufzeichnungsträgersystem anpassbar sind.

Aufgabe der Erfindung ist es, einen Behälter für Magnetbandkassetten, Kompaktschallplatten und gegebenenfalls weitere Aufzeichnungsträger zu schaffen, der den obigen Forderungen Rechnung trägt.

Die gemäss der Erfindung zur Lösung dieser Aufgabe vorgesehenen Merkmale sind im kennzeichnenden Teil des Patentanspruchs 1 genannt.

Damit ergibt sich ein Behälter, der die folgenden Vorteile aufweist:

Im Gegensatz zu den beiden bekannten Behältern braucht bei der erfindungsgemässen Ausführungsform die Kassette beim Einlegen oder Entnehmen nicht über die Frontplatte des Schiebers gehoben zu werden; dies würde nämlich bei den relativ grossen Abmessungen von Videokassetten bedeuten, dass entweder die Behälter dicker sein müssten, als vom eigentlichen Platzbedarf der Kassette her erforderlich, oder der Schieber so weit aus dem Gehäuse herausfahren müsste, dass die Standsicherheit nicht mehr zu gewährleisten ist. Gleichwohl ist aber durch den vorzugsweise schwenkbeweglichen Deckel, der von der Frontwandung gebildet wird, ein hinreichender Staubschutz gegeben. Die Kassette kann auf ihren Breitseiten erfasst werden, was ergonomisch günstig ist, und mehrere Behälter können so zu einem Archiv zusammengestellt werden, dass die Kassetten liegen oder aber stehen. Dabei ist von besonderer Bedeutung, dass die Geradführung des Schiebers beibehalten wird; er ist also auf dem gesamten Hub sauber geführt, so dass die Gefahr der Verklemmung minimal ist, selbst wenn – was aus Kostengründen bevorzugt ist – die aufeinander gleitenden Teile aus Kunststoff bestehen.

Ein solcher Behälter ist aber auch für Kompaktschallplatten geeignet, die auf engem Raum stapelbar sind, gleichwohl aber für die Entnahme gut zugänglich sein können, insbesondere, wenn man – was bevorzugt ist – nach dem Öffnen des Behälters und dem Ausschieben des Schiebers die zuvor dicht gepackten Platten auffächern lässt.

Die Patentansprüche 2 bis 47 definieren zweckmässige Ausgestaltungen des Gegenstandes des Patentanspruchs 1, wobei sich die Bedeutung der einzelnen Merkmale aus der Beschreibung der Ausführungsbeispiele entnehmen lässt.

Ausführungsbeispiele des Gegenstandes der Erfindung werden nachstehend unter Bezugnahme auf die beigefügten Zeichnungen näher erläutert.

Fig. 1 stellt im schematisierten Längsschnitt einen ersten Behälter im geschlossenen Zustand dar,

Fig. 2 zeigt den Behälter in analoger Darstellung, jedoch geöffnet,

Fig. 3 ist eine Explosionsdarstellung des Behälters in perspektivischer Darstellung, wobei Teile weggebrochen sind,

Fig. 4 zeigt die Lage von zu montierenden Bauteilen unmittelbar vor der Montage, in schematischer Schnittdarstellung,

Fig. 5 entspricht der Fig. 4, zeigt jedoch eine Seitenansicht,

Fig. 6 zeigt in Rückansicht mehrere zu einem Block gestapelte Behälter,

Fig. 7 zeigt in Draufsicht einen Randbereich eines der gestapelten Behälter,

Fig. 8 zeigt in Ansicht von unten das zugehörige Einklinkelement des nächsten Behälters,

Fig. 9 stellt im Schnitt ein Detail der Einklinkelemente dar,

Fig. 10 zeigt ein Behältergehäuse gemäss der Erfindung, in dem mehrere Kassetten untergebracht werden können, in Ansicht von vorn,

Fig. 11 ist eine vergrösserte Darstellung des in Fig. 10 mit «11» markierten Bereichs,

Fig. 12 ist ein Teilschnitt gemäss Linie 12–12 in Fig. 10,

Fig. 13 ist eine Schnittdarstellung nach Linie 13–13 der Fig. 10, wobei jedoch in dem mittleren Abteil die Feder und im zweitobersten Abteil der Schieber weggelassen sind,

Fig. 14 ist ein Vertikalschnitt durch eine weitere Ausführungsform eines Behälters,

Fig. 15 ist der zugehörige Horizontalschnitt,

Fig. 16 ist die zugehörige Frontansicht, wobei der Deckel weggelassen ist,

Fig. 17 zeigt eine Variante des Deckels von vorn,

Fig. 18 ist die zugehörige Seitenansicht,

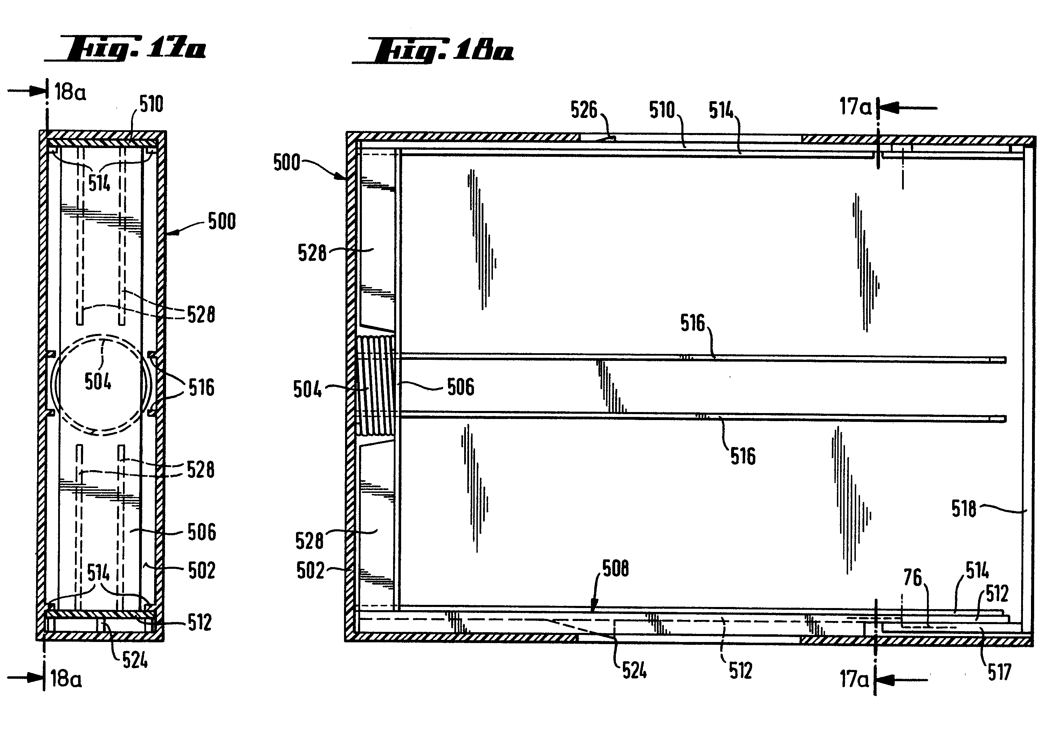

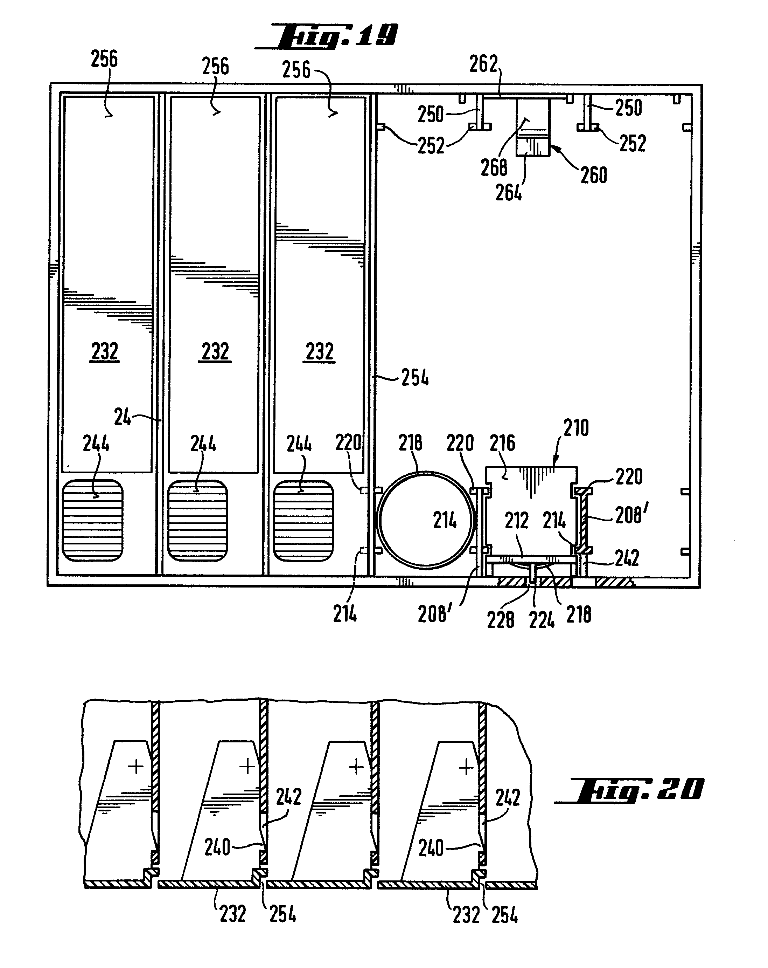

Fig. 17a bzw. 18a zeigen eine weitere, Fig. 17/18 ähnliche Form,

Fig. 19 ist eine Frontansicht eines Sammelblocks für mehrere Kassetten, wobei drei Abteile mit Deckel, ein Abteil mit Auswerffeder, ein Abteil mit Schieber und ein Abteil leer dargestellt sind,

Fig. 20 ist eine Teilschnittdarstellung durch mehrere Abteile im Frontbereich zur Darstellung der Deckelanordnung,

Fig. 21 bis 24 sind Schnitt- bzw. Teilschnittdarstellungen einer weiteren Ausführungsform,

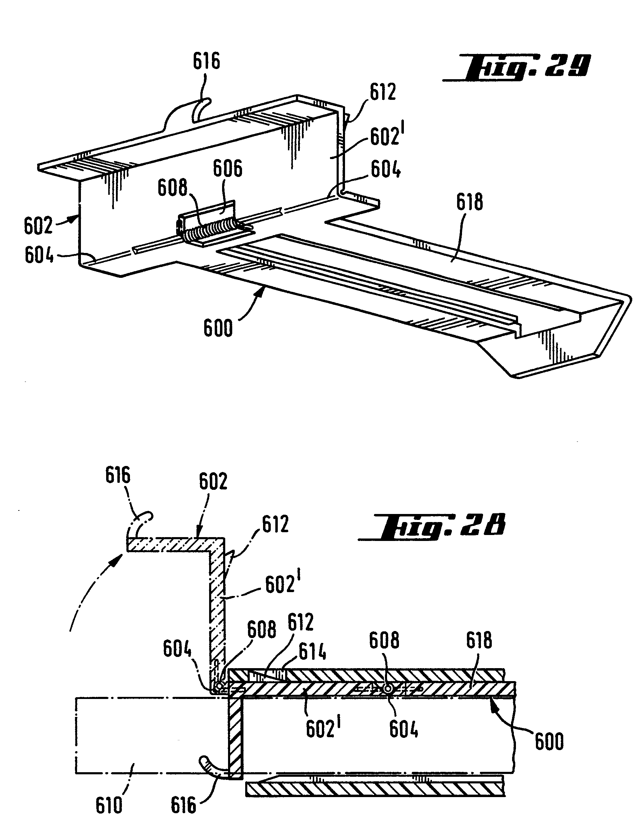

Fig. 25 bzw. 26 und 27 zeigen Einsatzteile für die erste bzw. zweite Ausführungsform zur Anpassung an kleinere Aussenabmessungen von Kassetten,

Fig. 28 stellt im Schnitt eine weitere Ausführungsform eines Behälters dar, wobei der hintere Teil weggebrochen ist,

Fig. 29 zeigt perspektivisch von unten den Schieber für die Ausführungsform nach Fig. 28, und

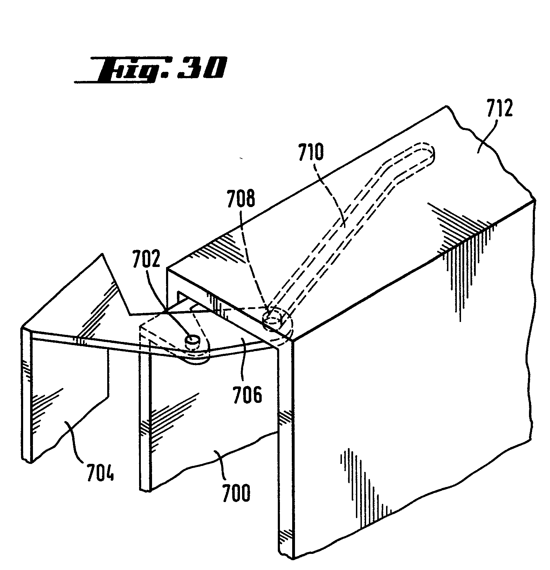

Fig. 30 stellt perspektivisch eine Zwangsführung für das Öffnen bzw. Schliessen eines Behälterdeckels dar,

Fig. 31 bis 45 beziehen sich auf ein bevorzugtes Ausführungsbeispiel,

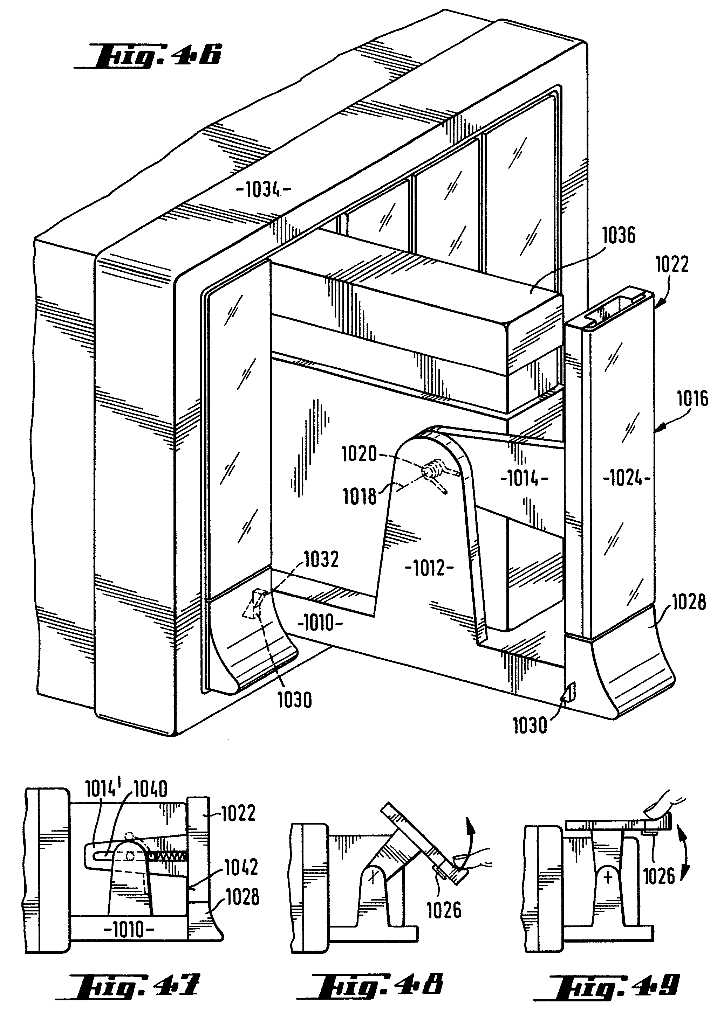

Fig. 46 bis 49 beziehen sich auf eine weitere Ausführungsform,

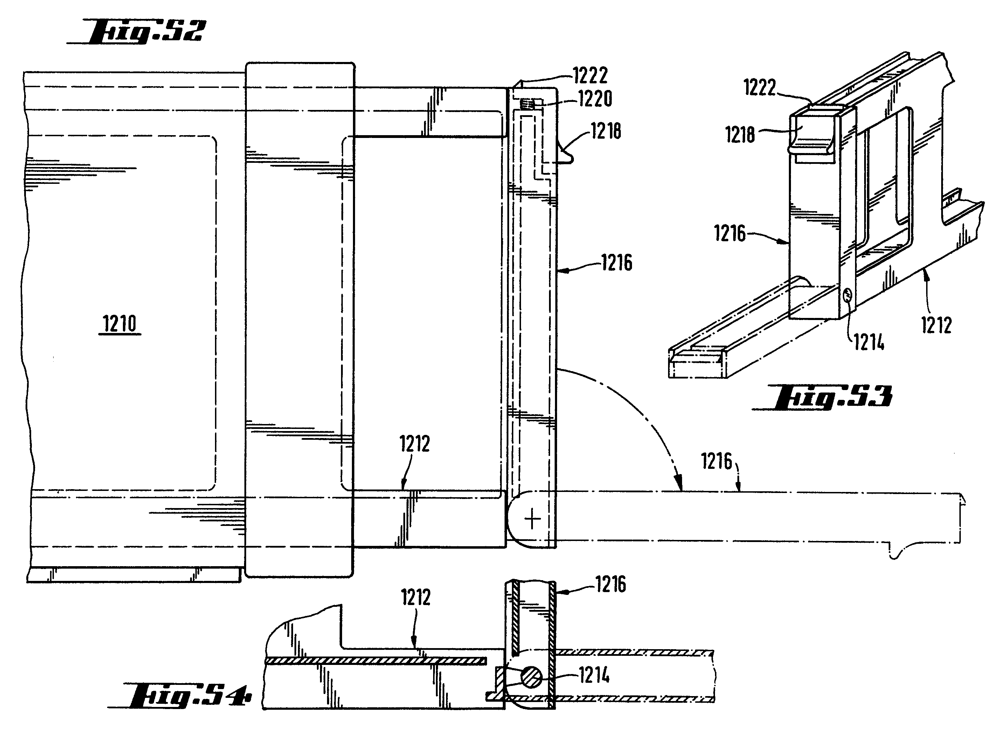

Fig. 50 und 51 zeigen eine weitere Ausführungsform,

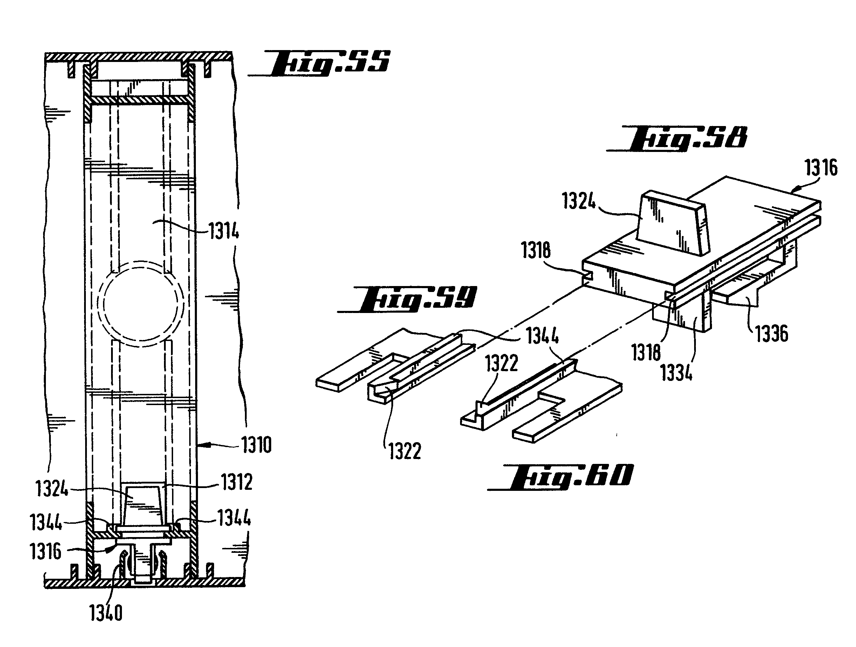

Fig. 52 bis 54 stellen eine weitere Ausführungsform dar,

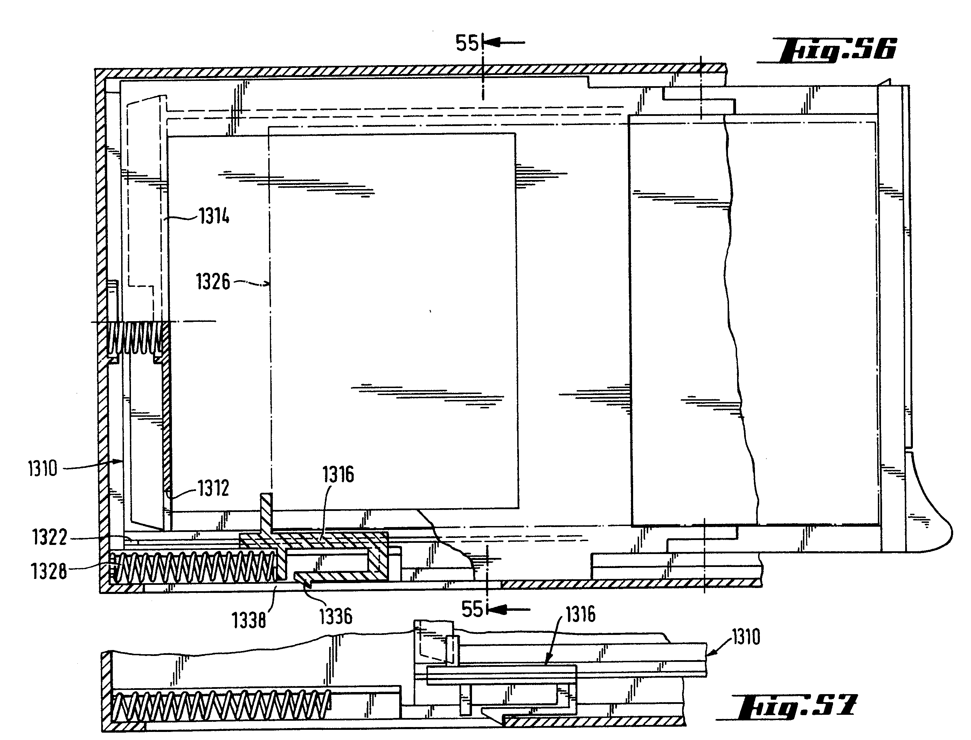

Fig. 55 bis 60 zeigen eine andere Bauart eines Behälters für die Anpassung an unterschiedlich grosse Kassetten,

Fig. 61 bis 63 stellen schematisch eine Mediothek dar,

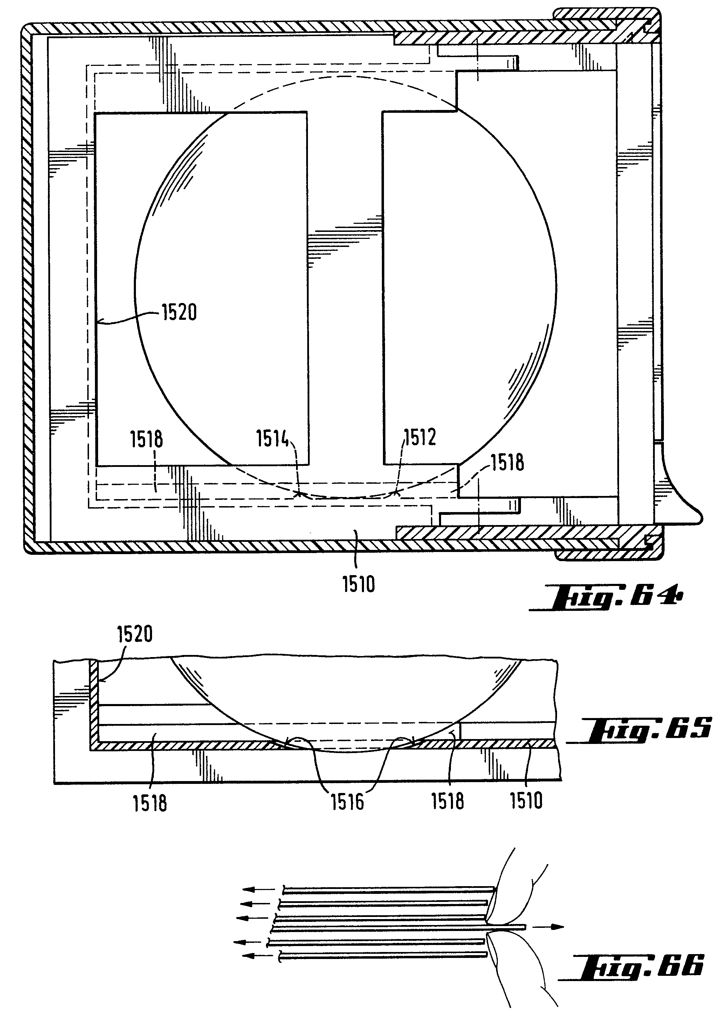

Fig. 64 bis 70 betreffen Behälter zur Aufnahme von scheibenförmigen Aufzeichnungsträgern, insbesondere sogenannter «compactdiscs», und

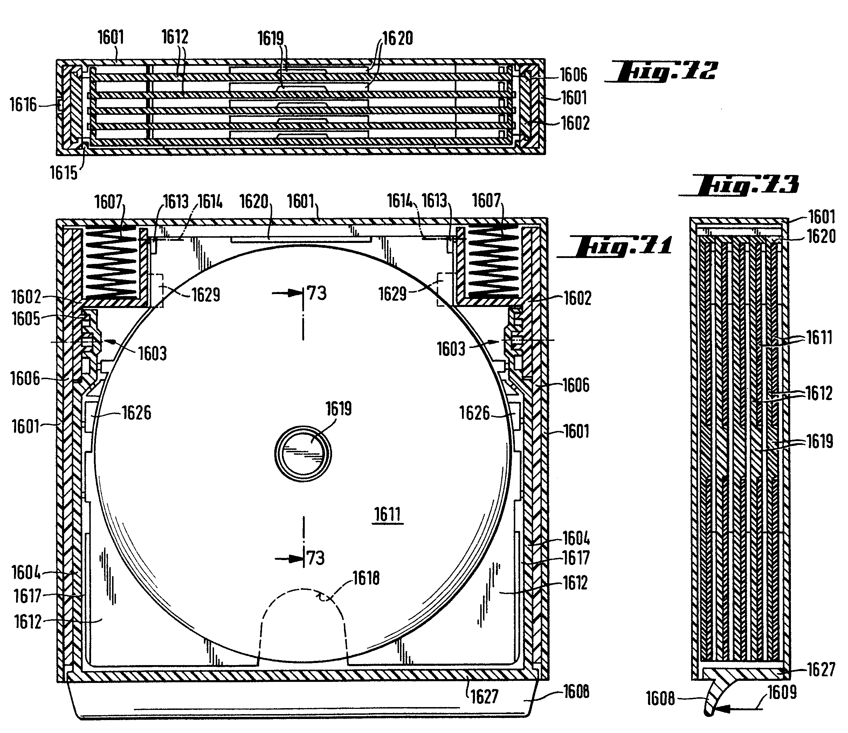

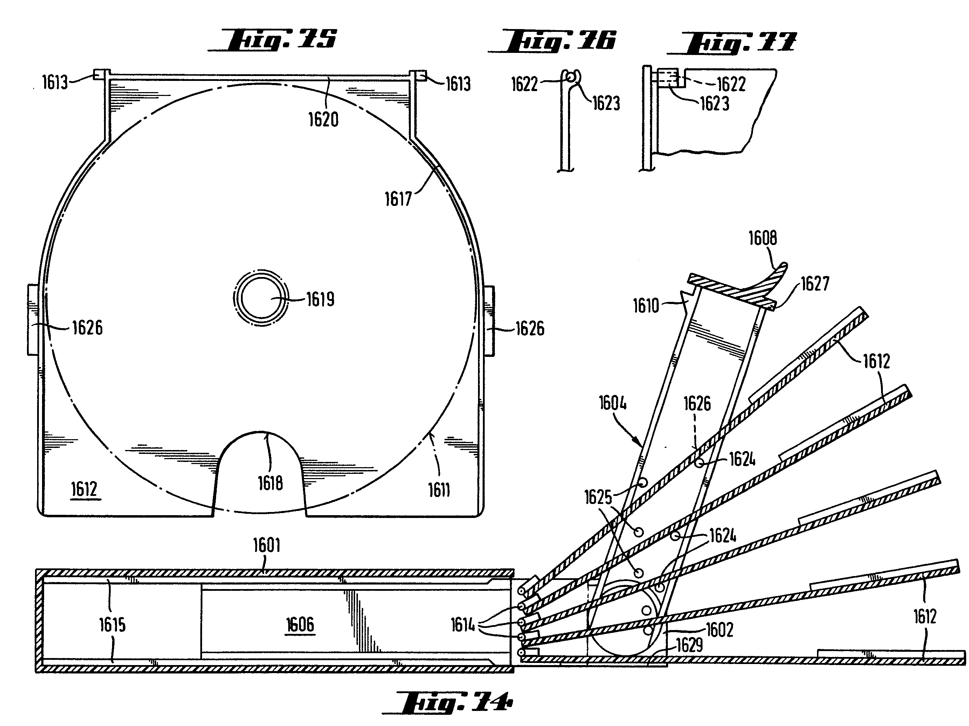

Fig. 71 bis 80 zeigen eine alternative Behälterbauart für flache, scheibenförmige Aufzeichnungsträger, vor allem für sogenannte Compactdiscs.

Zunächst werden Videokassettenbehälter behandelt.

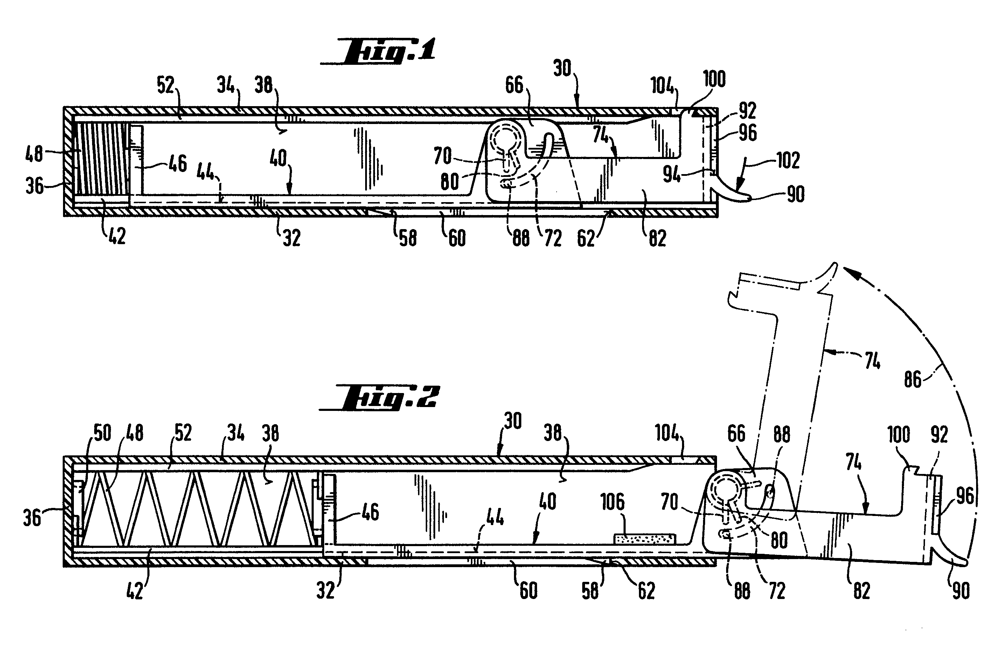

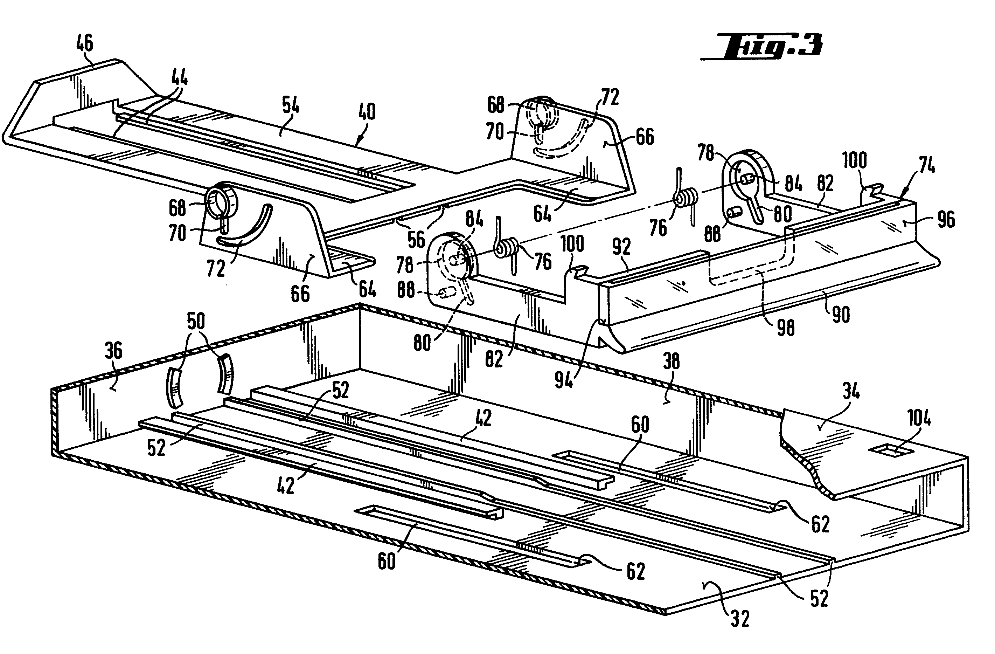

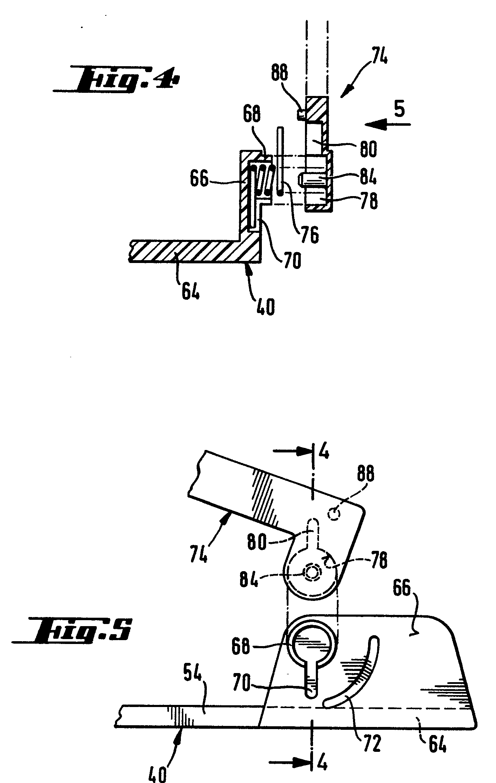

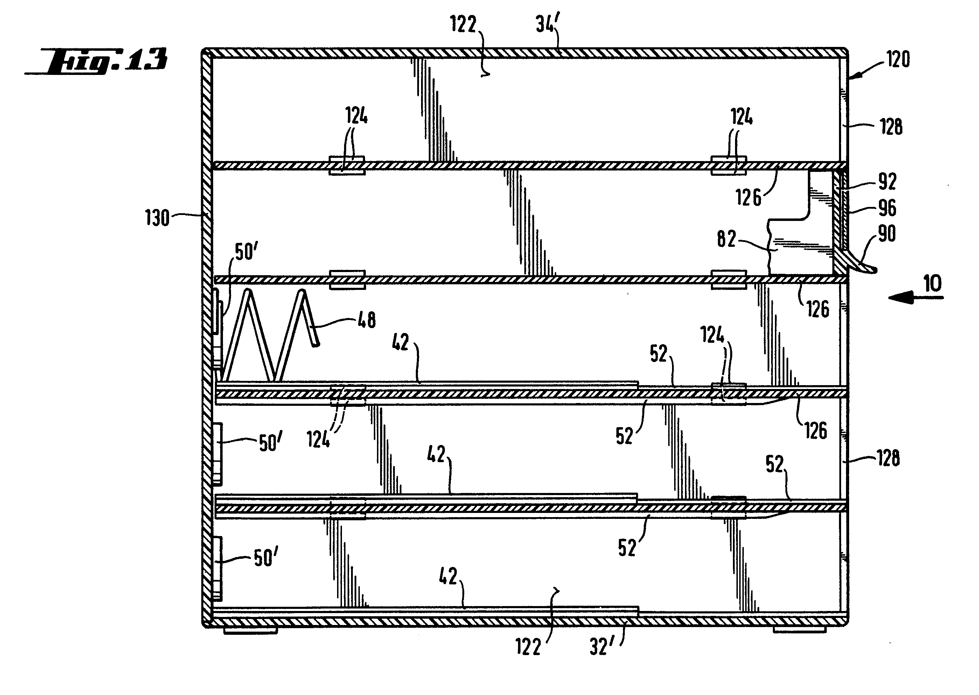

Die Fig. 1 bis 13 beziehen sich auf eine erste Bauform des Behälters. Man erkennt in Fig. 1 ein im wesentlichen blockförmiges Gehäuse 30 mit Boden 32, Deckwand 34, Rückwand 36 und Seitenwänden 38. Im Gehäuse ist ein Transportschieber 40 gleitbeweglich aufgenommen. Man erkennt in Fig. 3, dass an den Gehäuseboden 32 Führungsstege 42 angeformt sind, längs denen an den Schieber angeformte Führungsrippen 44 laufen. An der Gehäuserückwand 36 einerseits und an einer Rückplatte 46 des Schiebers andererseits stützt sich eine Auswerfefeder 48 ab, die hier als Schraubenfeder ausgeführt ist. Sie sitzt auf Nokken 50, angeformt an die Gehäuserückwand 36, und wird während des Schieberauswurfs gegen Ausknicken durch Stützschienen 52 gesichert, die an Deck- und Bodenwandung des Gehäuses angeformt sind. Auf den bodenseitigen Stützschienen ist auch der Frontbereich des Schiebers geführt, dessen Bodenplatte 54 zu diesem Zweck mit Einschnitten 56 versehen ist. Auf der Unterseite der Schieberbodenplatte 54 sind zwei nasenförmige Anschläge 58 vorgesehen, die in Schlitzen 60 des Gehäusebodens 32 laufen und die Auswerfbewegung des Schiebers beim Auflaufen auf die Schlitzendkante 62 begrenzen.

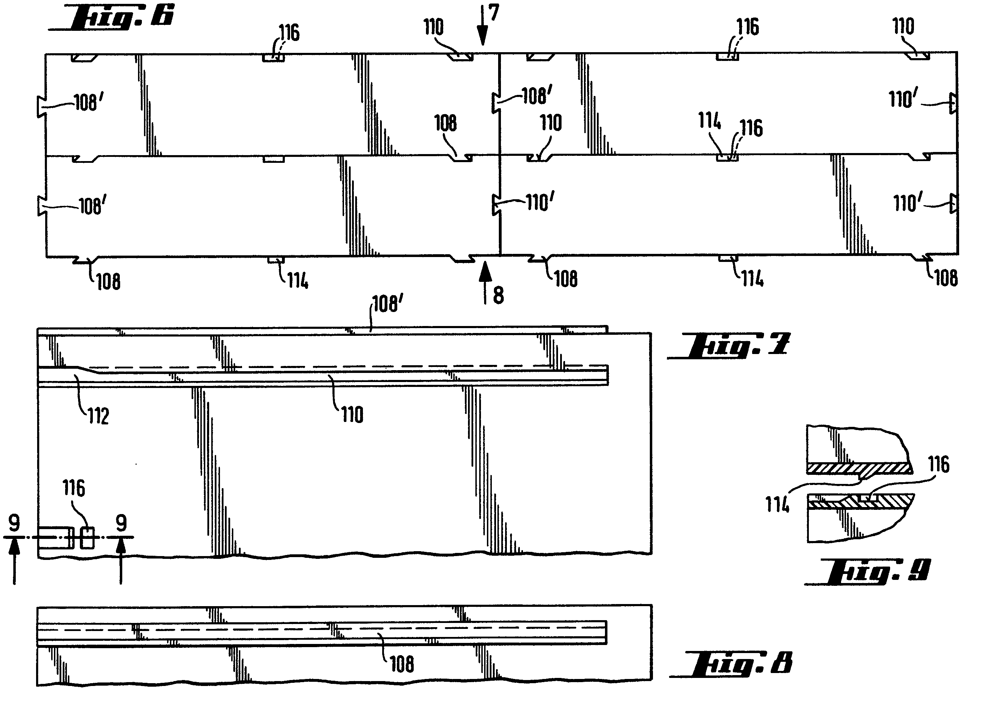

Die Schieberbodenplatte ist auf dem grössten Teil ihrer Erstreckung in Auswerfrichtung schmaler als der Innenraum des Gehäuses, verbreitert sich jedoch nach der Gehäusefront hin um zwei Flügel 64, an deren Aussenkanten sich Wangen 66 nach oben erstrecken. An die Wangen ist jeweils eine hohlzylindrische Hülse 68 angeformt, und in die Wange sind ein kurzer, gerader Schlitz 70 und ein kreisbogenförmiger Schlitz 72, zentriert auf die Achse der Hülse 68, eingebracht. Die Tiefe der Schlitze lässt sich in Fig. 4 entnehmen.

Die Aussenwandung der Hülse 68 bildet den Lagerzapfen für den Deckel 74, während sie zugleich eine Schenkelhalsfeder 76 aufnimmt, deren einer Schenkel in den Schlitz 70 greift. Der Deckel besitzt zu den Hülsen 68 komplementäre Lagerpfannen 78 mit einem wegragenden weiteren Schlitz 80 zur Aufnahme des anderen Federschenkels.

Bei der Montage werden die Arme 82 des im wesentlichen einen U-förmigen Grundriss aufweisenden Deckels auseinandergespreizt, so dass die Lagerpfannen 78 über die Hülse 68 schnap-

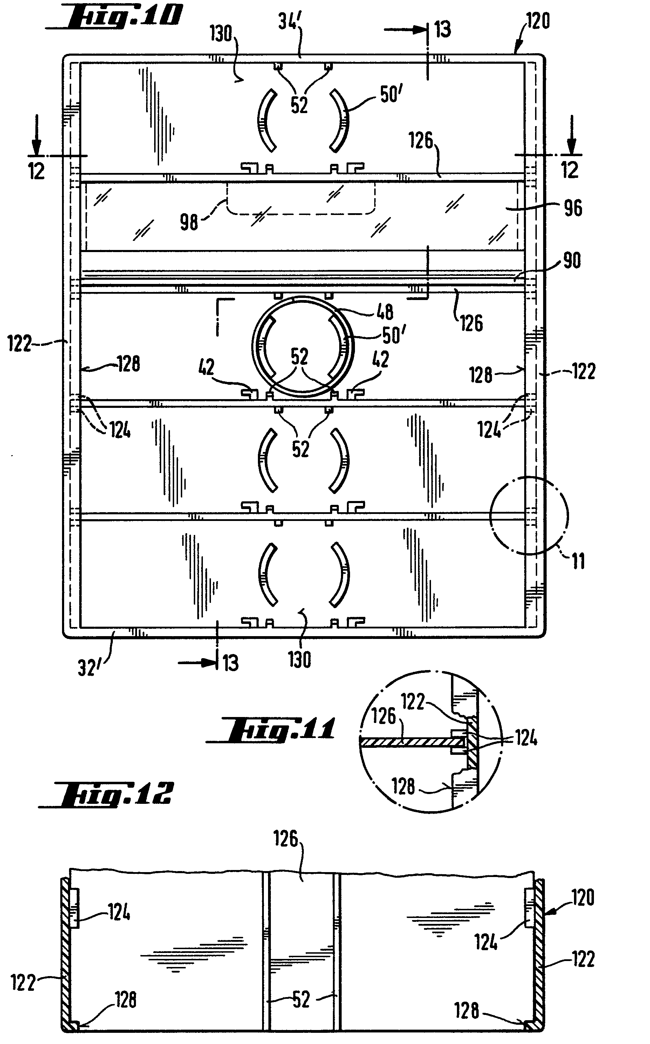

pen können. Dabei wird zugleich die Schenkelhalsfeder 76, vorher in die Hülse eingelegt, zentriert durch den Zapfen 84 im Zentrum der Lagerpfannen. Diese Position ist in Fig. 5 gezeigt. Schwenkt man nun den Deckel entgegen der Richtung des Pfeils 86 in Fig. 2, so schnappt der Anschlagstift 88 in den Schlitz 72, wobei zugleich die Schenkelhalsfeder die nötige Vorspannung erhält, das heisst in die in Fig. 2 strichpunktiert dargestellte Position des Deckels.

Der Basisteil des Deckels 74 umfasst eine Griffleiste 90, die gegenüber einer Frontplatte 92 weiter nach vorn ragt, so dass sich eine Stufe 94 ergibt. Auf ihr stützt sich ein transparenter Schutzschild 96 für ein (nicht dargestelltes) Etikett während des Anschweissens oder Anklebens ab, und die Entnahme des Etiketts wird durch einen Ausschnitt 98 der Frontplatte 92 erleichtert.

Die Arme 82 des Deckels weisen Haken 100 auf, die beim Einschieben des Schiebers in das Gehäuse unter der Gehäusedeckwandung 34 entlanggleiten, bis der Schieber seine innere Endstellung erreicht hat. Dabei drückt der Benutzer die gesamte Schieberbaugruppe nach innen gegen die Vorspannung der Auswerffeder 48. Zum Entnehmen der Kassette wird auf die Griffleiste nach unten gedrückt, Pfeil 102 in Fig. 1, wobei die Haken 100 aus den Durchbrüchen 104 gehoben werden, die sich durch die Deckwand 34 des Gehäuses erstrecken und in die sie beim Schliessen des Gehäuses unter der Wirkung der Schenkelhalsfeder 76 eingerastet hatten. Damit die Kassette nicht hinauskatapultiert wird, wenn der Benutzer die Griffleiste sofort nach dem Niederdrücken loslässt, ist ein Bremsklotz 106 aus Schaumstoff vorgesehen. Im übrigen bestehen das Gehäuse, der Schieber, der Deckel und der Schutzschild aus Kunststoff.

Fig. 6 zeigt ein Beispiel in Rückansicht, wie durch Anbringen von Stapelschienen 108 und Stapelnuten 110 auf Boden- bzw. Deckwand 36 bzw. 34 des Gehäuses mehrere solcher Behälter zu einem vertikalen Block gestapelt werden können. Auch seitlich können entsprechende Elemente 108' bzw. 110' vorgesehen sein. Diese Elemente ragen nicht bis ganz zur Frontseite (vgl. Fig. 8), und zwar aus ästhetischen Gründen. Das Zusammenschieben beim Stapeln wird durch die Erweiterung 112 der Nuten 110 erleichtert, und der Zusammenhalt wird durch die Verriegelungsnasen 114 sichergestellt, die in eine Vertiefung 116 elastisch einschnappen.

Man kann aber auch, wie aus Fig. 10 bis 13 hervorgeht, mehrere Schieber nach Fig. 1–5 in einem gemeinsamen Gehäuse unterbringen. Dieses besteht aus einem Aussenrahmen 120, dessen Boden 32' und Deckwand 34' der Ausführungsform nach Fig. 1–3 entspricht. An die Seitenwände 122 des Rahmens 120 sind U-Halterungen 124 angeformt, in die jeweils eine Zwischenplatte 126 einlegbar ist. Die Zwischenplatten entsprechen auf ihrer Oberseite dem Boden, auf ihrer Unterseite der Deckwand aus Fig. 1–3. Der Aussenrahmen ist an seiner Frontseite mit nach innen einspringenden Kanten 128 versehen, an denen die Zwischenplatten zur Anlage kommen, wenn auf die Rückseite des Rahmens 120 eine Endwand 130 aufgesetzt und befestigt wird, auf der dann auch die Federhaltenocken 50' ausgebildet sind.

Die beschriebenen Ausführungsformen haben den Vorteil, dass die Gleitführung für den Schieber in dessen mittleren Bereich vorgesehen sein kann, wodurch die Gefahr des Verklemmens infolge Schrägstellung (ungleichförmiger Druck auf den Griff beispielsweise) verringert wird. Allerdings sind dann auch am Gehäuse Gegenelemente der Führung im mittleren Bereich vorzusehen, was das einstückige Spritzen eines Blockgehäuses schwierig macht.

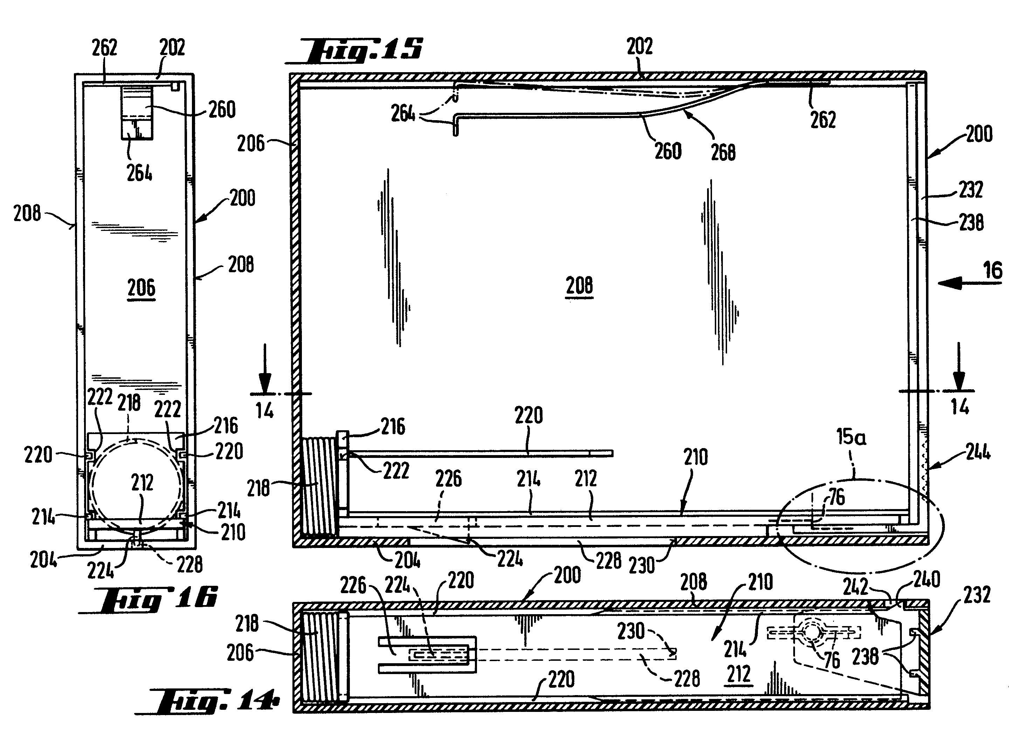

Die Ausführungsform nach Fig. 14 bis 20 weist diese Merkmale nicht auf, und sie lässt sich daher kostengünstig fertigen.

Fig. 14 bis 16 zeigen einen Einzelbehälter. Das Gehäuse 200 besitzt auch hier Deckwand 202, Boden 204, Rückwand 206 sowie Seitenwände 208. Im Gegensatz zur Darstellung nach Fig. 1–13 werden hier die Kassetten nicht auf ihrer Breitseite «liegend», sondern auf einer ihrer längeren Schmalseiten «stehend» aufbewahrt, so dass also hier die Seitenwände 208 die grösste Abmessung besitzen.

In dem Gehäuse ist ein im Grundriss L-förmiger Schieber 210 gleitbeweglich geführt. Der in Richtung auf die Gehäuseöffnung ragende L-Schenkel 212 des Schiebers hat umgekehrt U-förmigen Querschnitt (vgl. Fig. 16), so dass er sich an den Seitenwänden 208 und am Boden 204 abstützen kann; ferner greifen seitliche an die Seitenwände 208 des Gehäuses angeformte Rippen 214 über diesen Schenkel. Am kürzeren Schieberschenkel 216 drückt die Auswerfefeder 218, abgestützt an der Gehäuserückwand 206 und gegen Ausknicken gesichert durch weitere Rippen 220, die auch in Ausschnitte 222 des Schieberschenkels 216 greifen. Auf der der Feder 218 abgewandten Seite des Schenkels 216 liegt eine eingelegte Kassette an. Die Nase 224 am Schieberschenkel 212 sitzt auf einem ausgeschnittenen, elastisch federnden Lappen 226, so dass der Schieber in das Gehäuse eingeführt werden kann, wonach die Nase in den Schlitz 228 in dem Boden 204 einfällt und den Schieber gegen Herausfallen sichert, wenn er das Ende seines Auswerfehubs erreicht, indem sie auf die Endkante 230 aufläuft.

Am frontseitigen Ende des Schieberschenkels 212 ist der Deckel 232 angelenkt. Die Anlenkung ist ähnlich wie bei der ersten Ausführungsform ausgebildet, jedoch ist die Hülse 234 hier auf etwa 90° ausgeschnitten, um den Öffnungswinkel des Deckels zu begrenzen, und es ist eine Schnappsicherung zwischen Schieber und Deckel vorgesehen, mit 236 bezeichnet. Der nur einseitig gelagerte Deckel ist durch zwei Rippen 238 versteift. – Der an den Deckel angeformte Verriegelungshaken 240 greift bei geschlossenem Behälter in das Gehäuseloch 242. Mit dem Pfeil 244 ist angedeutet, wo der Benutzer auf den Deckel zu drücken hat, um die Verriegelung zu lösen (vgl. auch Fig. 19); wegen der einseitigen Anlenkung des Deckels ist die Auslösung an dieser Stelle bevorzugt. – Alternativ kann man eine Strebe 246 vom Schenkel 212 des Schiebers bis zur Deckwandung hochziehen und so eine zweite Anlenkstelle 248 für den Deckel schaffen, dargestellt in Fig. 17 und 18. Dies ergibt eine Verbesserung der Verwindungssteife des Deckels 232'.

Noch einfacher als bei Fig. 10 bis 13 lässt sich bei dieser Ausführungsform die Zusammenfassung mehrerer Aufnahmeteile in einem gemeinsamen Gehäuse realisieren. Dies ist in Fig. 19 und 20 gezeigt.

Wie man aus der Erläuterung der Fig. 14 bis 16 entnehmen konnte, haben die Seitenwände 208 nur nahe der Bodenwandung 204 Funktionsteile, so dass man bei dem Blockgehäuse den Rest der Wände entfallen lassen kann. Es sind nur Trennstege 250 vorgesehen, an denen sich die eingesetzten Kassetten abstützen und die Verdickungen 252 tragen entsprechend den Rippen 220, 214 auf den bodenseitigen Restwänden 208'. Feder 218, Schieber 210 und Deckel 232 entsprechen der vorhergehenden Beschreibung, wobei allerdings der Deckel im Profil (vgl. Fig. 20) bei 254 abgestuft ist, um den Auslenkweg für den Entriegelungsvorgang freizumachen, aber ohne dass dadurch ein hässlicher offener Schlitz entsteht. Im Bereich 256 können Etiketten aufgeklebt sein oder hinter einem transparenten Fenster eingesetzt werden.

Damit auch Kassetten kleinerer Aussenabmessungen untergebracht werden können, sind in allen Abteilen des Gehäuses bzw. in dem Innenraum eines Einzelbehälters – dargestellt in Fig. 14 bis 16 – Blattfedern 260 befestigt, z.B. durch Einklemmen eines verdickten Endes 262, wie dargestellt. Am freien Ende der Blattfeder ist ein Haken 264 abgewinkelt, an dem eine kürzere und schmalere Kassette anschlägt. Eine breitere Kassette dagegen lenkt beim Einschieben die Blattfeder bereits bei deren Wölbung 268 aus, so dass der Haken unwirksam wird, wie gestrichelt dargestellt. Im übrigen erfüllt die Feder 260 noch die Funktion der Bremse 106 aus Fig. 2.

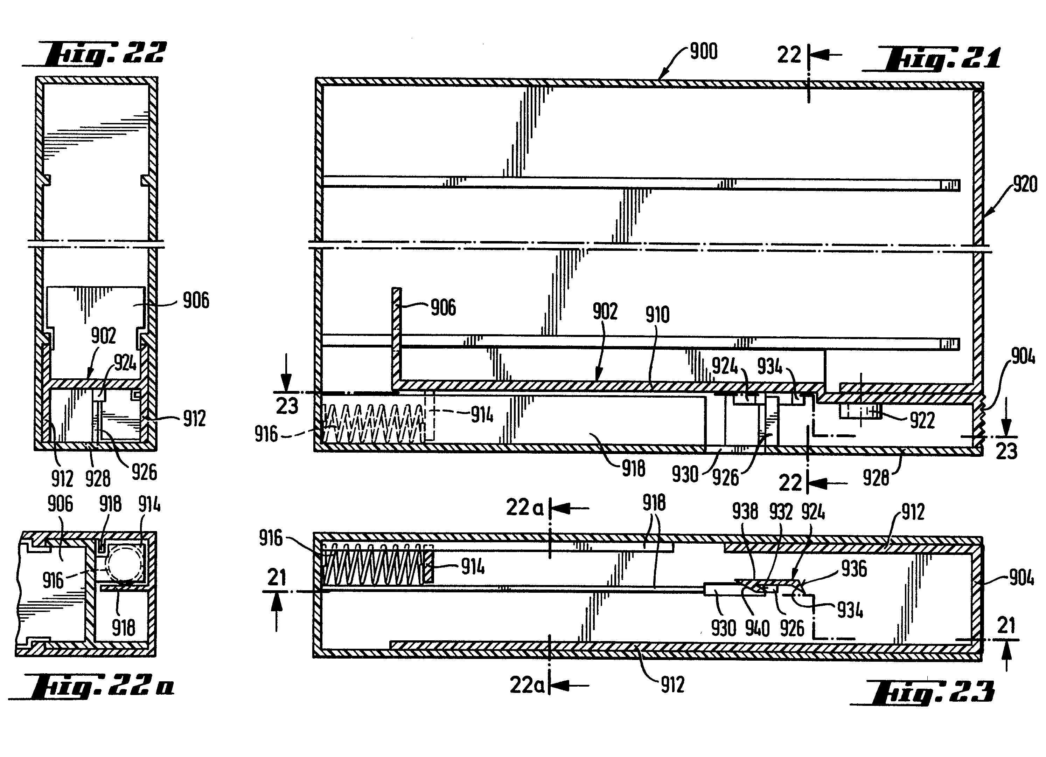

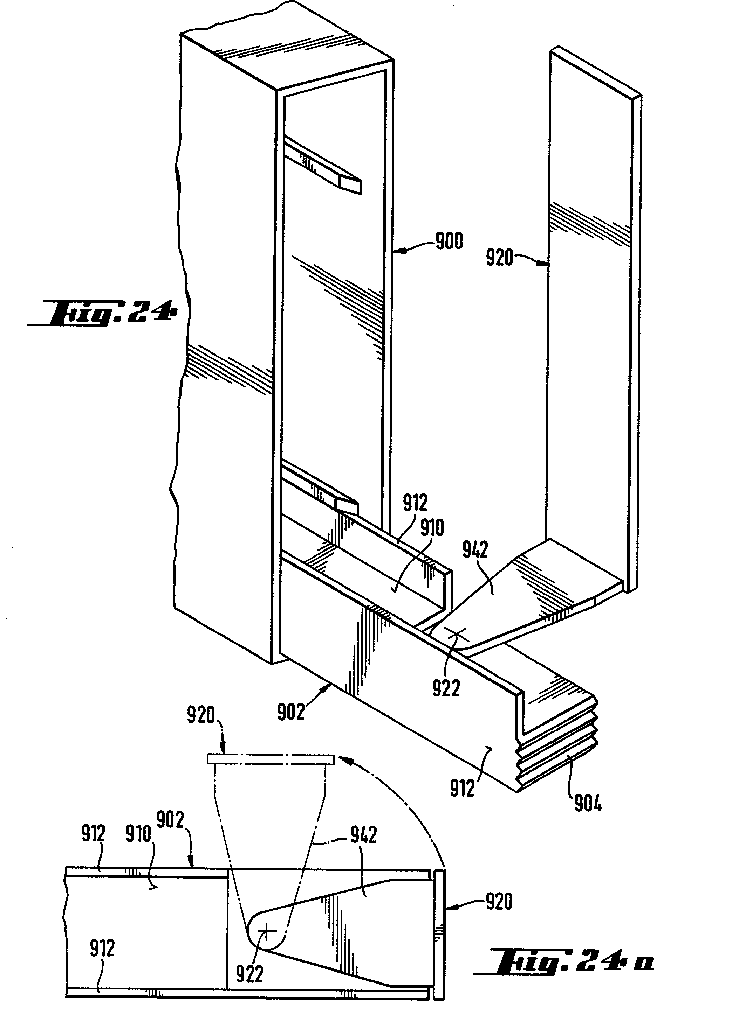

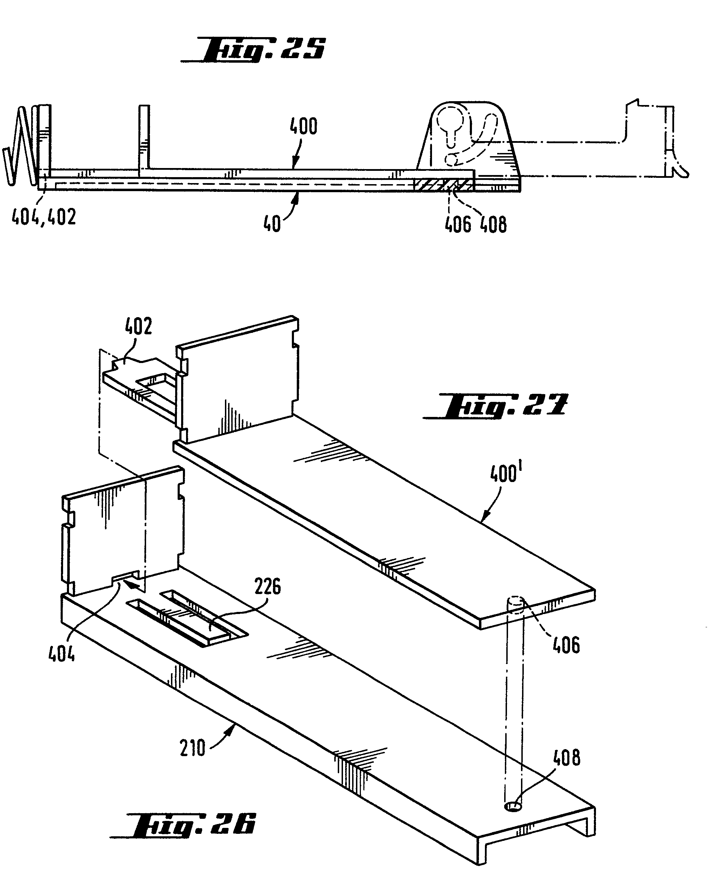

Fig. 21 bis 24a zeigen ein zweites Ausführungsbeispiel. Das Gehäuse 900 ist auch hier in einen Aufnahmeraum für die Kassette und einen seitlichen Kanal unterteilt, und zwar erkennt man in Fig. 22 den H-förmigen Querschnitt des Auswerfers 902, der diesen Kanal ausfüllt und frontseitig mit einer Taste 904 abschliesst. Wie aus Fig. 21 entnehmbar, weist der Auswerfer innen einen Auswerfarm 906 auf und von diesem weg erstreckt sich zur Gehäuseöffnung ein Längsschenkel 910, der durch die seitlichen H-Schenkel 912 geführt ist. Auf einen zweiten Arm, den Federarm 914, drückt die Schraubendruckfeder 916, die durch Rippen 918 gegen Ausknicken gesichert ist. Der Deckel 920 ist bei 922 schwenkbar an den Längsschenkel des Auswerfers angelenkt, so dass die Frontseite des Gehäuses auch im Bereich des Kassettenaufnahmeraums geschlossen ist.

An den Schenkel 910 des Auswerfers ist kanalseitig eine Kulisse 924 angeformt, deren Profil in Fig. 23 erkennbar ist. Mit der Kulisse wirkt ein Pfosten 926 zusammen, der an den Gehäuseboden 928 angeformt ist. Wenn, wie im dargestellten Ausführungsbeispiel, das Gehäuse und der Auswerfer ebenso wie der Deckel Kunststoffspritzteile sind, ist es zweckmässig – wie dargestellt –, in den Boden 928 einen Durchbruch 930 einzubringen, durch den beim Spritzen der entsprechende Formstempel ragt. Der Pfosten 926 hat einen Querschnitt mit einer Haltekante 932, die sich in einem komplementären Einschnitt der Kulisse 924 fängt, wenn der Auswerfer im Gehäuse verriegelt ist.

Zum Entnehmen einer eingelegten Kassette drückt man auf die Taste 904, womit die Kulisse relativ zum Pfosten 926 verschoben wird. Ihre Steuerkante 934 drückt dabei den elastisch auslenkbaren Pfosten 926 nach unten in Fig. 23 weg, bis er wieder in seine Ruhelage zurückschnellen kann, sobald er von der Kulisse freigegeben wird. Lässt nun der Benutzer mit dem Druck auf die Taste nach, drückt die Steuerfläche 936 den Pfosten wieder beiseite, jetzt in der entgegengesetzten Richtung, und die einschnittfreie Kante 938 der Kulisse gleitet am Pfosten vorbei, so dass der Auswerfer die Kassette mit nach aussen transportiert. Beim Schliessen bringt die Steuerkante 940 der Kulisse den Pfosten 926 wieder in die in Fig. 23 dargestellte Position.

Zusammen mit der Kassette wird der gesamte Auswerfer nebst an ihm angelenktem Deckel nach vorn transportiert. Im Gelenk des Deckels ist eine Feder, vorzugsweise eine Schenkelhalsfeder, so eingefügt, dass der Deckel in die Offenstellung gemäss Fig. 24 vorgespannt ist. Beim Schliessen läuft der Deckel mit seiner Wange 942 auf die Gehäuseendkante auf und wird dadurch geschlossen, wie in Fig. 24a mit ausgezogenen Linien dargestellt.

Was oben zu den Ausführungsformen bezüglich Stapelung von Einzelgehäusen bzw. Ausbildung von Blockgehäusen, Begrenzung des Auswerfweges usw. gesagt worden ist, lässt sich sinngemäss auch bei dem zuletzt beschriebenen Ausführungsbeispiel anwenden.

Fig. 25 zeigt, wie ein auf den Schieber 40 gemäss Fig. 1–13 aufgesetzter Adapter 400 die Anpassung an kürzere Kassetten ermöglicht. In ähnlicher Form ist der Adapter 400' ausgebildet, der mit einer Zunge 402 in einen Durchbruch 404 im kürzeren L-Schenkel eines Schiebers 210 gemäss Fig. 14–16 einschiebbar und durch Druckknopf 406 festgelegt werden kann, der in ein zu diesem Zweck vorgesehenes Loch 408 im Schieber greift.

Die Fig. 17a und 18a zeigen in analoger Darstellung wie die Fig. 17 bzw. 18 ein weiteres Ausführungsbeispiel.

Das Gehäuse 500 weist wiederum im wesentlichen rechteckige Gestalt auf. An seiner Rückwand 502 stützt sich die Auswerfefeder 504 ab, die als Schraubendruckfeder ausgebildet ist und auf den Querschenkel 506 des Transportschiebers 508 einwirkt. Der Querschenkel 506 ist schmaler als die lichte Weite des Gehäuses, wie man deutlich in Fig. 17a erkennen kann, und an seine beiden Enden schliessen sich Längsschenkel 510 bzw. 512 an. Diese dienen der Führung des Schiebers, zu welchem Zweck an das Gehäuse Führungsrippen 514 angeformt sind, welche die Längsschenkel hintergreifen. Wegen der schmaleren Ausbildung des Querschenkels kann dieser beim Herausgleiten des Schiebers aus dem Gehäuse an diesen Führungsrippen vorbeigleiten, ebenso an den weiteren Rippen 516, die die Feder 504 gegen Ausknicken sichern.

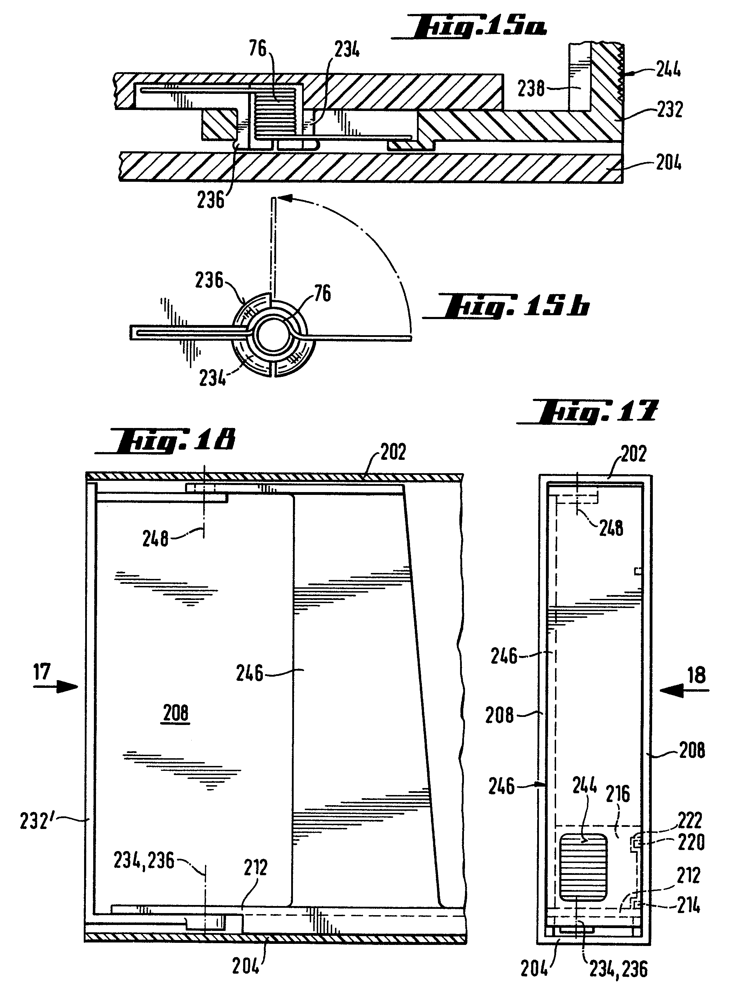

Der untere Längsschenkel 512 ist – ähnlich Fig. 17 und 18 – mit U-förmigem Querschnitt ausgebildet, während der obere Längsschenkel 510 glatt an der oberen Deckwand anliegt. Der Grund für diese unterschiedliche Ausbildung liegt darin, dass beim Einlegen einer Kassette unten die verschwenkte Wange 517 des Deckels 518 stören würde, während dies oben nicht der Fall ist. Allerdings könnte man auch oben den Längsschenkel so wie unten ausbilden. Die Nase 524 entsprechen in ihrer Funktion den Nasen 224 aus Fig. 15, wobei natürlich die Nase 526 am oberen Längsschenkel kleiner ausfällt. – Die Ver- und Entriegelung ist wie in Fig. 14 ausgebildet. Versteifungsrippen 528 verringern die Durchbiegung des Querschenkels 506 unter der Wirkung der Feder 504.

Es kann zweckmässig sein, bei dem Behälter nach den vorbeschriebenen Ausführungsformen die Auswerfbewegung der Kassette zu dämpfen, etwa indem man eine Kolben-Zylinderanordnung mit Luftdurchtrittsdrosselung vorsieht.

Bei der Ausführungsform nach Fig. 28 und 29 sind der Schieber 600 und eine Deckelbaugruppe 602 ein einstückiges Spritzgussteil, wobei das Gelenk 604 ebenfalls gleich angespritzt ist. In einem Ausschnitt 606 im mittleren Gelenkbereich ist eine Schenkelhalsfeder 608 so eingesetzt, dass die Deckelbaugruppe 602 in die in Fig. 29 dargestellte (in Fig. 28 gestrichelt angedeutet) Entnahmeposition der Kassette 610 vorgespannt ist. Mit Nasen 612 ist die Längsplatte 602′ in Ausnehmungen des Gehäuses 614 verriegelt, und die Verriegelung lässt sich durch Druck auf die Taste 616 lösen. Im Gegensatz zu der ersten beschriebenen Ausführungsform ist hier keine Bodenplatte des Schiebers vorgesehen, sondern der Schieber ist mit einer «Deckplatte» 618 an der Oberseite des Gehäuses geführt. Im übrigen besteht im wesentlichen Übereinstimmung zwischen beiden Ausführungsbeispielen.

In den bisher beschriebenen Figuren war der Deckel durch eine Federvorspannung im Bereich seines Gelenks in die Entnahmeposition der Kassette vorgespannt. Fig. 30 zeigt, dass die Federvorspannung der Auswerfe- oder Hauptfeder auch mittelbar die Öffnung des Deckels bewirken kann: Der am Schieber 700 bei 702 mittels Zapfen angelenkte Deckel 704 weist einen in das Gehäuseinnere ragenden Fortsatz 706 auf, an den ein Zapfen 708 angeformt ist. Dieser greift in eine Nut 710, die im Innern des Gehäuses in der schmalen Wandung 712 ausgenommen ist. In der dargestellten Öffnungsposition bildet das Ende der Nut den Anschlag für die Begrenzung des Aufklappwinkels; schiebt man nun die Kassette hinein, wird der Zapfen längs der Nut geführt und verschwenkt den Deckel wieder in seine Schliesslage. Beim Öffnen läuft der umgekehrte Vorgang ab. Diese Art der Deckelbetätigung ist besonders vorteilhaft, wenn der Deckel nicht zugleich auch Entriegelungsorgan ist.

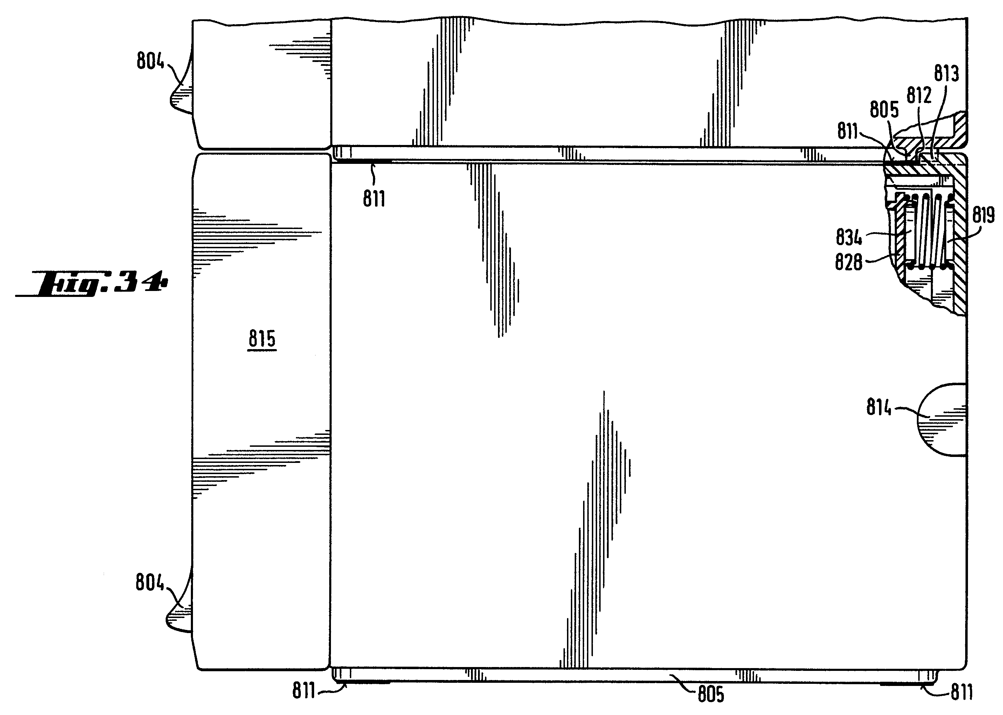

Die Fig. 31 bis 45 beziehen sich auf eine weitere Ausführungsform, wobei die Fig. 33 und 37 bis 39 mögliche Varianten darstellen.

Bei dieser Ausführungsform sind jeweils fünf Kassetten in einem gemeinsamen Behälter untergebracht. Es versteht sich aber, dass diese Zahl nicht zwingend ist und dass für andere gewünschte Zahlen der Fachmann die geringfügigen Änderungen leicht selbst konzipieren kann. Der Behälter ist so ausgebildet, dass er mit weiteren gleichartigen Behältern stapelbar ist.

Fig. 31 zeigt den Behälter von vorn. In dem Gehäuse 800 sind fünf Schieber 801 geführt, deren Deckel 802 in einen oberen Abschnitt 803, der ein Etikett aufnehmen kann, und einen unteren Abschnitt mit einer Taste 804 aufgeteilt ist.

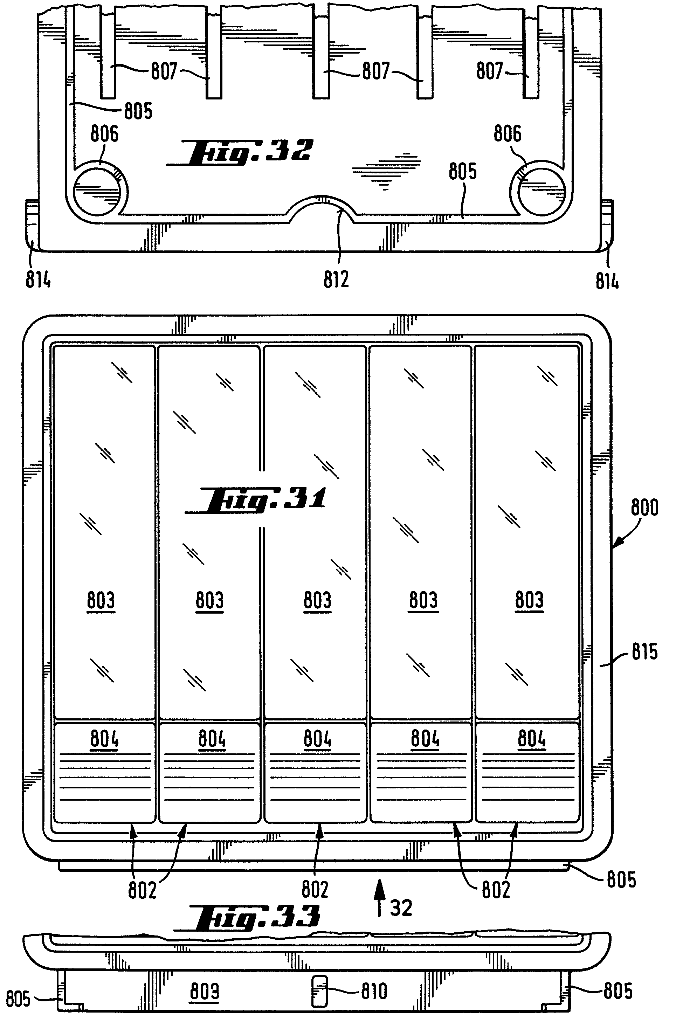

Das Gehäuse 800 besitzt einen Fuss 805, der als umlaufender Kantsteg in Fig. 32 erkennbar ist und in seinen Eckausrundungen kreisförmige Aufnahmen 806 für einsteck- oder einklebbare Haftfüsschen 811 besitzt. In den parallelen Schlitzen 807 des Gehäusebodens laufen die Anschlagnasen 808 der Schieber, welche deren Ausschubweg begrenzen.

Gemäss Fig. 33 kann der Fuss 805 als Seitenführung für eine flache Schublade 809 mit Griff 810 ausgebildet sein; in einer solchen Schublade kann man Informationsmaterial zu den Aufzeichnungen der eingelegten Kassetten unterbringen.

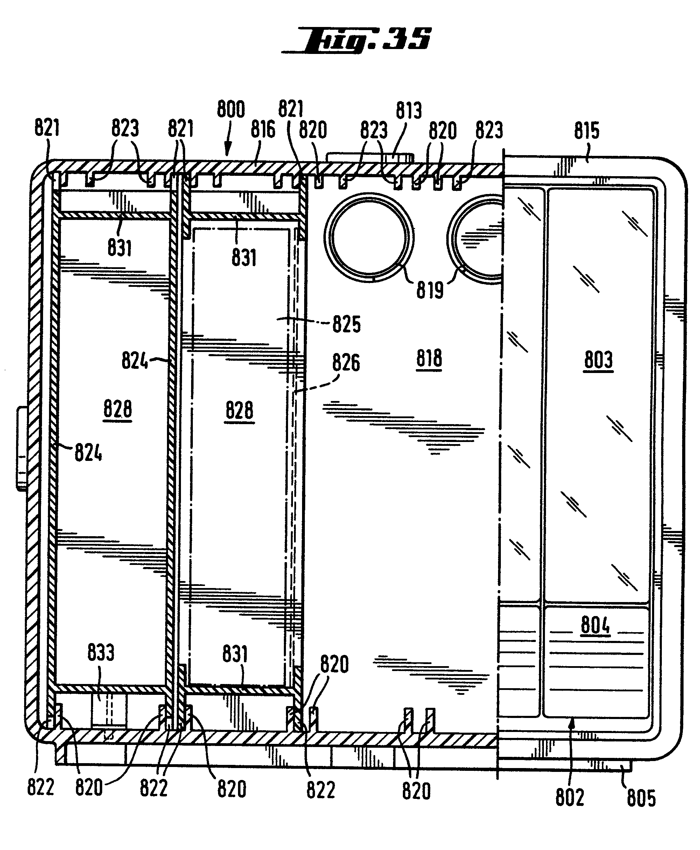

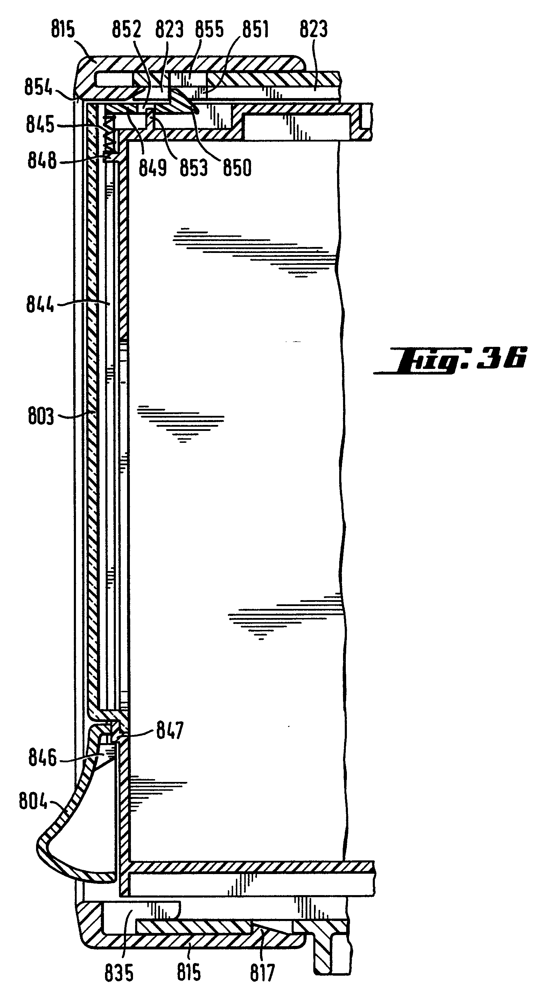

Die Einbuchtung 812 des Fusses dient als Zentrierung beim Stapeln, zu welchem Zweck an der Oberseite des Gehäuses ein komplementärer Zentriernocken 813 vorgesehen ist. Ebenfalls an das Gehäuse 800 hinten angeformt sind seitliche Distanznocken 814 für das seitliche Aneinanderreihen mehrerer gleichartiger Behälter. Der frontseitige Gehäusekragen 815 ist geringfügig höher als die hinter ihm anschliessende Deckwand 816 des Gehäuses, wie man in Fig. 34 erkennt, in der ein weiterer Behälter aufgesetzt ist. Der Gehäusekragen 815 ist ein getrennt gefertigtes Teil, das auf das Gehäuse 800 aufgeschnappt ist, und zwar an mehreren Stellen seines Umfangs; eine solche Schnappverbindung ist in Fig. 36 bei 817 erkennbar, wobei Niederhalter 835 die Gehäusefrontkante von der anderen Seite abstützen.

Der linke Teil der Fig. 35 zeigt einen Blick in ein aufgeschnittenes Gehäuse 800 auf dessen Rückwand 818. Man erkennt im mittleren Bereich der Zeichnung, dass für jeden Schieber in dem zugehörigen Gehäusefach ein Halte- und Zentrierring 819 für eine Auswerffeder (wie in Fig. 34 angedeutet, handelt es sich um eine einfache Schraubenfeder) an die Rückwand 818 angeformt ist. Die Führungsrippen 820 greifen jeweils zwischen obere Kufen 821 bzw. untere Kufen 822 des Schiebers, die zur Herabsetzung der Haftreibung möglichst kleinflächig ausgebildet sind; zwischen den Führungsrippen sind weitere Stege 823 vorgesehen, an denen sich der Schieber – wie noch zu erläutern – verriegelt. In das linke Aufnahmefach des Gehäuses ist ein Schieber in einer Schnittdarstellung etwa in der Ebene A–A der Fig. 40 eingezeichnet, in der er Vertikalstreben 824 aufweist. Im an dieses anschliessenden Aufnahmefach ist der Schieber etwa in der Ebene B–B geschnitten eingezeichnet, und eine eingelegte Kassette 825 ist mit ihrem Umriss strichpunktiert angedeutet. Ein etwa miteingelegter Programmzettel 826 oder dergleichen kann die Bewegung des Nachbarschiebers nicht behindern, da er von den Vertikalstreben 824 abgestützt wird.

Fig. 40 bis 45 zeigen den Schieber im einzelnen. Er umfasst einen rückseitigen Rahmen 827, an dessen Rückwand 828 auf der der Gehäuserückwand 818 zugekehrten Seite ein deren Zentrierring 819 entsprechender Zentrierring 834 sowie eine versteifende Kreuzverrippung 830 angeformt sind. Die beiden Horizontalstreben 831 haben das in Fig. 35 dargestellte H-Profil, dessen Querschenkel mit gewichtssparenden Durchbrüchen 832 versehen sind. In dem abwärtsgekehrten Kanal der unteren Horizontalstrebe ist ein Träger 833 für die oben erwähnte Anschlagnase 808 angeformt. Die seitliche Verrippung der Vertikalstreben dient der Formstabilität beim Spritzen des Rahmens 827 aus Kunststoff.

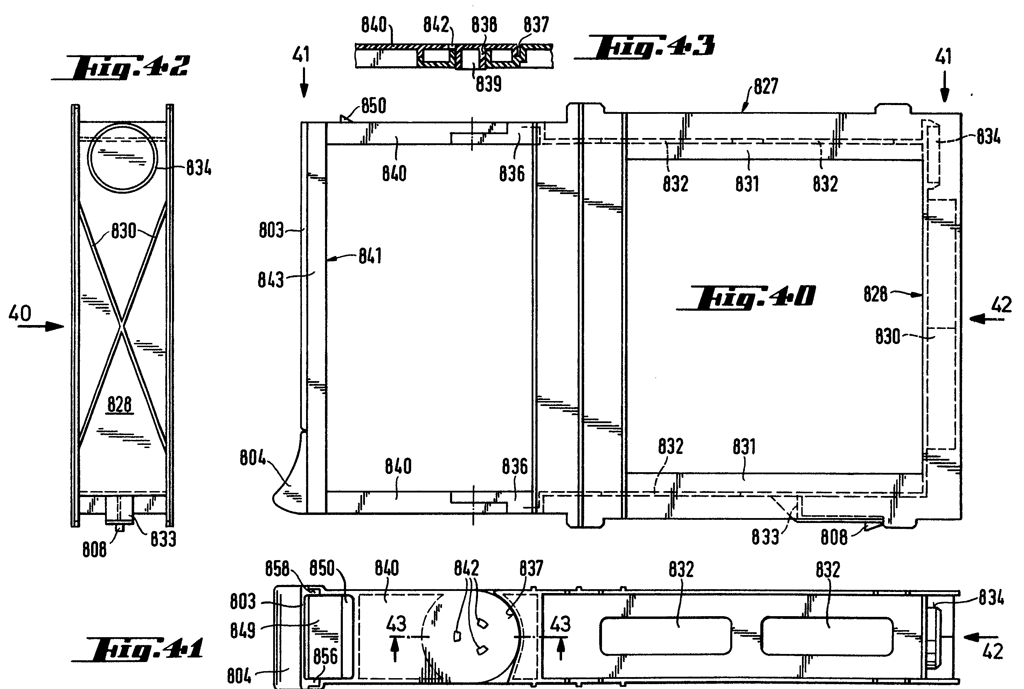

In Verlängerung des H-Profilquersteges der Horizontalstreben 831 erstreckt sich nach vorn (also links in Fig. 40) je ein Lagerauge 836, das nach innen abgestuft ist mit einer Kontur, wie sie in Fig. 41 gestrichelt eingezeichnet ist. Zentriert auf den Konturkreisbogen 837 ist eine Lagerbohrung 838 eingeformt – vgl. Fig. 43 –, durch die ein Lagerzapfen 839 an dem jeweiligen Horizontalarm 840 des Deckels 841 ragt, welcher durch Einschnappen gehalten ist. Die Durchbrüche 842 auf der dem Lager abgewandten Seite der Arme 840 ermöglichen das Entformen des Deckels beim Spritzgiessen.

Die vertikale Stirnwand 843 des Deckels trägt eine vertikalverschiebliche Taste 804 mit intergralem Schieberiegel 844, wobei der Aufbau am deutlichsten in Fig. 36 erkennbar ist.

Der Schieberiegel 844, an der Stirnwand 843 geführt, wird von einer Druckfeder 845 nach oben gedrückt in eine Position, in der die Nase 846 der Taste 804 an einer Stirnwandstufe 847 anliegt. Die Druckfeder stützt sich unten auf einem Stirnwandfortsatz 848 ab und wirkt oben auf einen Querarm 849 des Schieberiegels, der schliesslich den Sperrhaken 850 trägt. Wie Fig. 36 erkennen lässt, greift der Sperrhaken 850 in der Einschubstellung in eine Aussparung 851 der Rippen 823. In eine Ausnehmung 852 im Querarm 849 greift ein Zapfen 853 des Deckelarms und stützt den Querarm beim Einschub des Schiebers ab, wenn der Sperrhaken durch Auflaufen auf die abgeschrägte oder abgerundete Kante 854 des Gehäusekragens heruntergedrückt wird. Der vom Gehäusekragen überdeckte Durchbruch 855 des Gehäuses ermöglicht das spritztechnische Vorsehen der Aussparung 851.

Vor dem Schieberiegel trägt der Deckel 841 ein Etikettenfenster 803 aus glasklarem oder matt-transparentem Kunststoff. Diese getrennt ge-spritzte Bauteil ist in Fig. 45 dargestellt; es wird mit Hakenfortsätzen 856 an seinen Seitenkanten 857 in entsprechende Aussparungen der komplementären Aufnahmerinnen 858 der Stirnwand 843 eingehangen, und ein ähnlicher Hakenfortsatz 859 greift durch eine etwa fingergliedgrosse Aussparung der Stirnwand 843 und – natürlich – auch einer entsprechend grossen Aussparung des Schieberiegels 844 und verhakt sich hinter jener an der Stirnwand. Die Fixierung erfolgt durch einschnappende Stifte 860. Diese Aussparungen machen ein eingelegtes Etikett zugänglich, so dass es nach oben ausgeschoben werden kann.

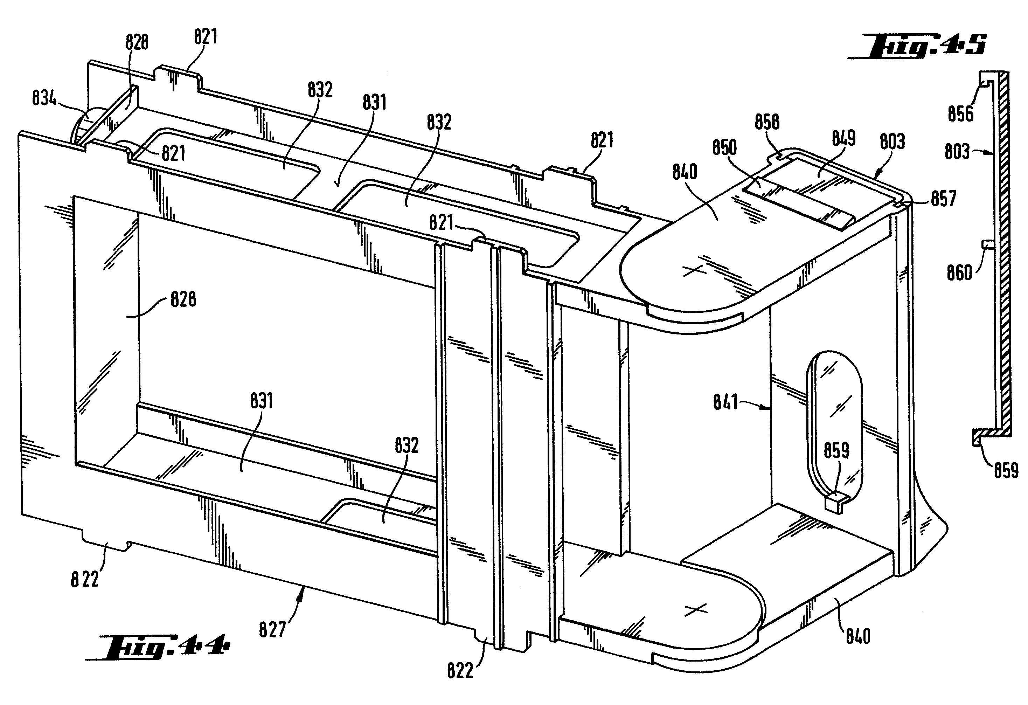

Es versteht sich, dass in dem einen Lager 838/ 839 eine den Deckel 841 in die in Fig. 44 dargestellte Position vorspannende Schenkelhalsfeder eingesetzt ist, ähnlich wie in Fig. 3 dargestellt.

Beim Druck auf die Taste 804 nach unten klinkt der Sperrhaken aus, und die Auswerffeder befördert den Schieber nach aussen, bis die Nase 808 an dem Ende des Schlitzes 807 aufläuft; in dieser Position ragen die Lageraugen über den Gehäusekragen hinaus, und der Deckel wird von der Schenkelhalsfeder aufgeschwenkt.

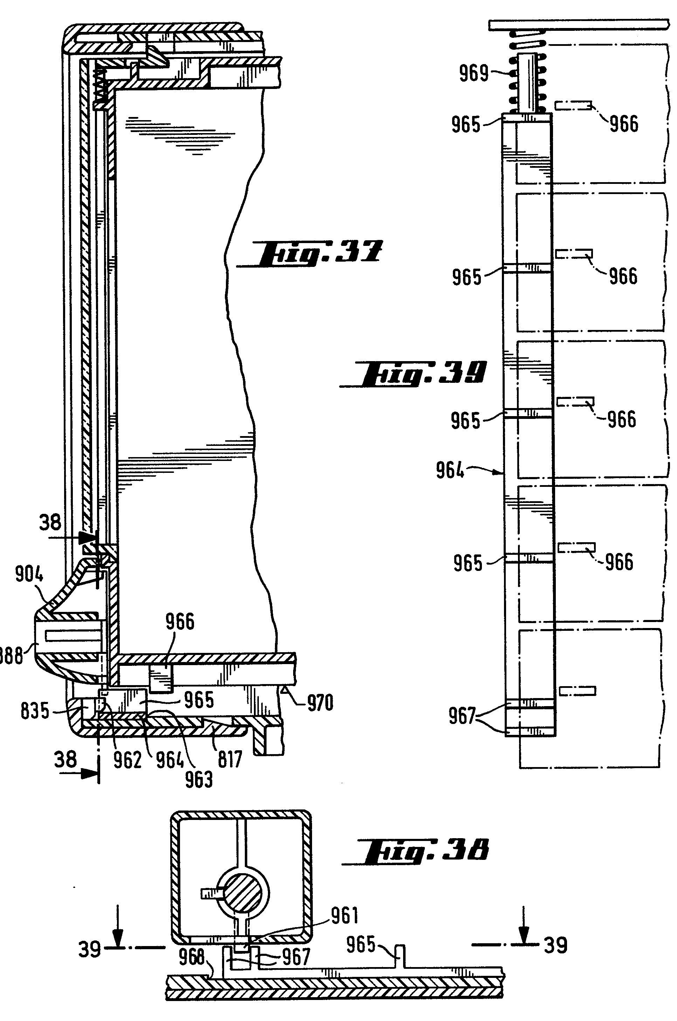

Die Fig. 37 bis 39 zeigen eine Variante dieser Ausführungsform, bei der jedem Behälter ein Schloss zugeordnet ist.

In die Taste 904 ist ein handelsübliches Zylinderschloss 888 in Miniaturausführung eingesetzt, und dessen Sperrarm 961 steht in der Sperrposition vor einem angeformten Daumen 926 an dem Niederhalter 835, so dass die Taste nicht gedrückt weden kann. Damit man mit einem einzigen Schloss für alle fünf Fächer auskommt, liegt unter dem Daumen 962, nach innen von einer Gehäusestufe 963 abgestützt, ein verschiebliches Sperrglied 964 in Form einer Leiste mit hochstehenden Zinken 965. In der Verschlussposition des Sperr-gliedes stehen die Zinken genau vor Gegenzinken 966, jeweils an einen Schieber unten angeformt, so dass selbst beim Drücken einer Taste der Schieber nicht ausgeschoben werden kann. Zwischen ein Zinkenpaar 967 greift der Sperrarm 961 des Zylinderschlosses. Eine Druckfeder 969 spannt das Sperrglied in Öffnungsstellung vor, in welcher es an der Anschlagstufe 968 anliegt. – Die Linie 970 symbolisiert die unterste Ebene des Lagerauges, das also über die Zinken hinweggleiten kann.

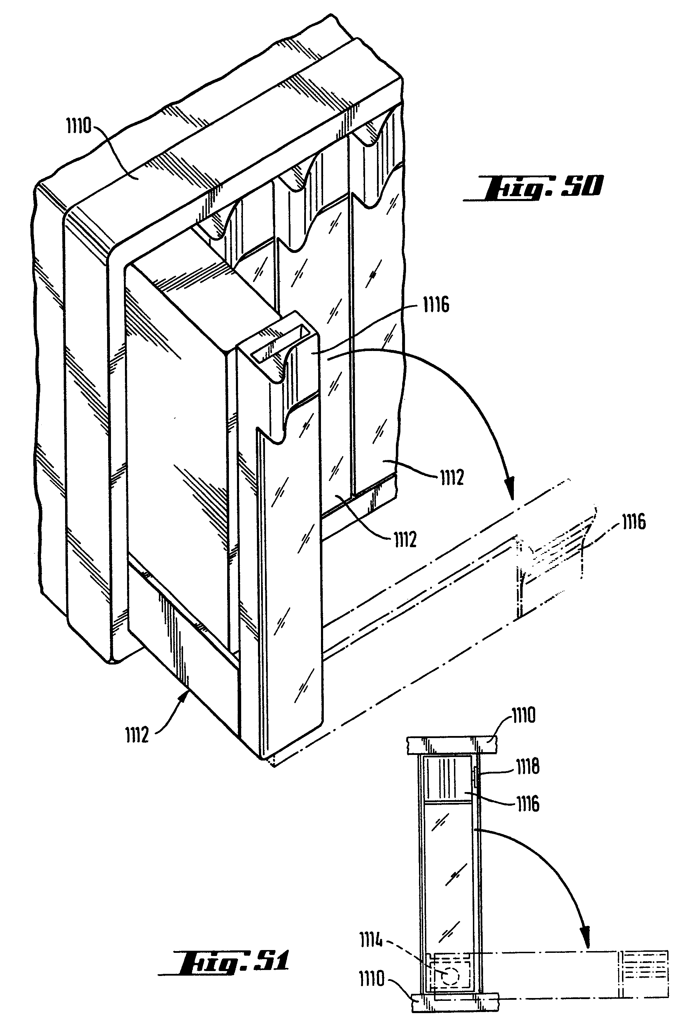

Fig. 46 bis 49 zeigen eine Variante, bei der am Schieber das Tor in anderer Weise gelenkig angeordnet ist. Von der Schiebersohle 1010 erstreckt sich nach oben eine Wange 1012, in der ein Hebelarm 1014 eines Tores, das insgesamt mit 1016 bezeichnet ist, um eine Achse 1018 drehbar gelagert ist. Im Bereich der Achse ist eine Schenkelhalsfeder vorgesehen, die das Tor 1016 in die in Fig. 49 dargestellte Position vorspannt. In der Endlage des Tores 1016, in der die Schenkelhalsfeder 1020 im wesentlichen entspannt ist, erreicht das Tor die in Fig. 49 dargestellte Position.

Das Tor selbst umfasst eine Sichtplatte 1022, hinter deren glasklarer Frontpartie 1024 ein Etikett einsetzbar ist. In der Position nach Fig. 46 und 47 stützt sich diese Platte 1022 mittels eines Fusses 1026 auf der Sohle 1010 des Schiebers dar. Gleitverschieblich nach unten ist in der Platte 1022 die Taste 1028 geführt und von einer in den Zeichnungen nicht dargestellten Feder in die Position gemäss Fig. 47 vorgespannt, aus der sie nach unten wegbewegt werden kann. Bei dieser Wegbewegung wird ein Keilriegel 1030 aus der Falle 1032 herausgehoben, so dass eine im Gehäuse 1034 eingebaute Auswerffeder (in der Zeichnung nicht dargestellt) den Schieber in die Entnahmeposition nach vorn verschiebt. Die Schenkelhalsfeder 1020 verdreht nun, wenn der Benutzer den Finger löst und damit der Druck nachlässt (Fig. 48), das Tor in die Position nach Fig. 49, in der die Video-Kassette 1036 nach vorn in Fluchtlinie mit der Gehäuseöffnung herausziehbar ist. Zum Aufräumen der Kassette wird diese in umgekehrter Richtung in das Gehäuse eingeschoben bis zu einem (nicht dargestellten) Anschlag, und der Vorgang läuft in umgekehrter Reihenfolge, also Reihenfolge Fig. 49, Fig. 48, Fig. 47, ab. Zum Schluss drückt der Benutzer auf die Platte 1022, wobei die Taste 1028 im Zusammenwirken der Keilflächen an dem Keilriegel 1030 und der Falle 1032 wieder verriegelt wird.

In einer nur in Fig. 47 angedeuteten Variante ist der Hebelarm 1014' mit einem Langloch 1040 versehen, so dass er unmittelbar an der Frontseite 1042 der Kassette anliegend in der Schliessstellung die Kassette sichern kann. Bei Betätigung der Taste fährt also der Schieber 1010 aus dem Gehäuse, als auch die Platte 1022 mit der Taste 1028 längs des Langlochs, so dass das Tor in eine Position gelangt, in der es nach oben über die vordere obere Endkante der Kassette kippen kann.

Bei der Ausführungsform nach Fig. 50 und 51 schwenkt das Tor um eine andere Achse. Man erkennt das Gehäuse 1110 mit drei Schiebern 1112. Ein Schieber ist in dem ausgefahrenen Zustand, wobei jedoch die um den Zapfen 1114 drehbare Taste 1116, die zugleich das Tor bildet, noch in der Verriegelungsposition steht. Die Taste weist z.B. für die Verriegelung eine Falle 1118 auf, und dem Zapfen-Schwenklager 1114 ist eine Feder (nicht gezeichnet) zugeordnet, z.B. eine Schenkelhalsfeder, die das Bauelement Taste, hier identisch mit dem Tor, in die in Fig. 50 gestrichelt dargestellte Position vorspannt. Diese Endlage kann durch Anschläge gesichert sein.

Um eine noch andere Achse schwenkt das Tor bei der Ausführungsform nach Fig. 52 bis 54.

Hier erkennt man links in der Seitenansicht gemäss Fig. 52 das Gehäuse 1210, längs dem der Schieber 1212 gleitbeweglich ist. Die Schiebersohle weist senkrecht zur Verschiebebewegung ein Zapfenlager 1214 auf, um das das Tor 1216 verdrehbar ist, nachdem es durch Relativverschiebung der Taste 1218 entgegen der Wirkung der Feder 1220 aus dem Gehäuse entriegelt worden ist, mittels Riegel 1222. Die Bewegung des Tores nach unten in die Horizontale erfolgt durch Schwerkraftwirkung oder eine eingebaute Feder, falls dies bevorzugt ist.

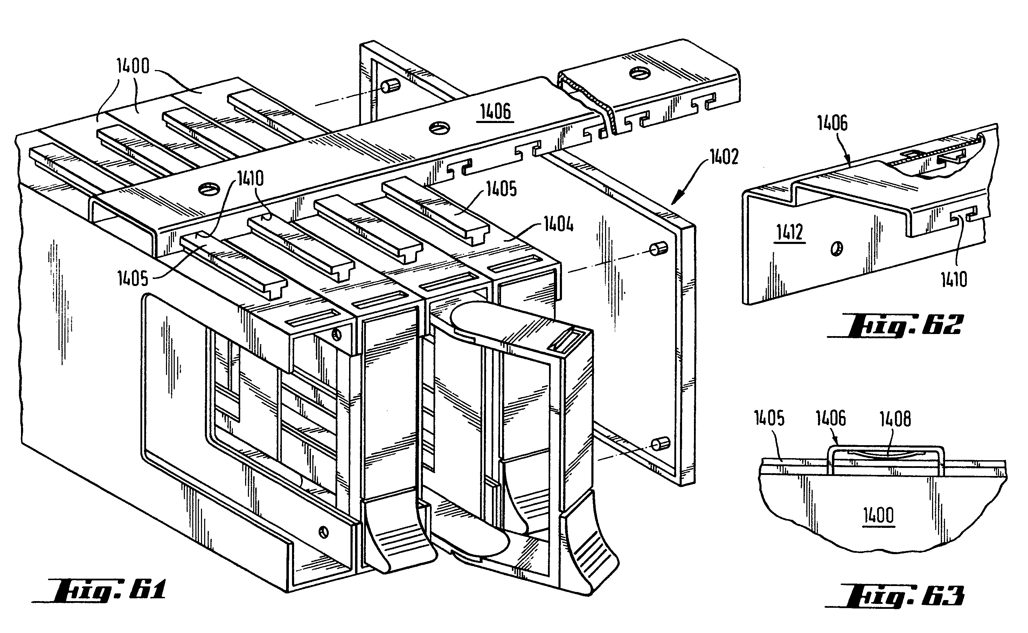

Fig. 55 bis 60 zeigen eine alternative Bauart eines Videokassettenbehälters für unterschiedliche Kassettenformate. Dabei ist Fig. 55 ein Schnitt nach Linie 55–55 der Fig. 56, welche ihrerseits einen Vertikal-Teil-Längsschnitt durch den Behälter zeigt. Fig. 57 entspricht dem unteren Teil der Fig. 56, jedoch in anderer Betriebslage, und Fig. 58–60 stellen Details perspektivisch dar.

Der Schieber 1310 ist in der Fig. 55 im Querschnitt dargestellt. Er hat einen Durchbruch 1312 in seiner Rückwand 1314, so dass ein Unterschieber 1316, der in Fig. 58 perspektivisch gezeichnet ist, hindurchtreten kann. Die seitlichen Schlitze 1318 des Unterschiebers werden in entsprechenden Stegen 1320 des Schieberbodens geführt; für die Montage weisen die Stege 1320 an ihrem freien hinteren Ende Nasen 1322 auf, welche beim Einschieben des Unterschiebers 1316 horizontal zur Seite gedrückt werden und dann verhindern, dass der Unterschieber herausfallen kann; die Enden der beiden Stege sind in Fig. 59 bzw. 60 gezeichnet. Der Unterschieber hat einen nach oben ragenden Lappen 1324, der sich jeweils von hinten an die hintere Stirnwand einer eingelegten Kassette anlegt, wie in Fig. 56 durch die strichpunktierte Linie 1326 angedeutet ist. Eine Hilfsfeder 1328 drückt den Unterschieber 1316 in Richtung auf das Tor 1330. Die Hilfsfeder 1328 ist so ausgelegt, dass sie nach einem in Fig. 57 dargestellten Federweg vollständig entspannt ist. Der Unterschieber 1316 weist einen zweiten Lappen 1334 auf, an dem sich die Feder 1328 abstützt. Schliesslich ist an dem Unterschieber auch noch eine Anschlagnase 1336 vorgesehen, die in den bodenseitigen Schlitz 1338 des Kassettengehäuses greift und den Hauptanschlag für den Schieber darstellt. Die stationären Stege 1340 sorgen dafür, dass die Hilfsfeder 1328 nicht seitlich ausknicken kann. Zu beachten sind noch die seitlich der Schlitzführungen 1318 vom Schieberboden hochstehenden Stützschienen 1344, auf denen die jeweils eingelegte Kassette ruht, so dass der Unterschieber 1316 vom Gewicht der Kassette selbst entlastet ist.

Die Fig. 61–63 zeigen in perspektivischer Darstellung (Fig. 61) eine «Mediathek», das heisst eine zu einer Baugruppe zusammengefasste Serie von gleichartigen Behältern, die sämtlich Videokassetten, aber – wie noch zu erläutern sein wird – auch andere Aufzeichnungsträger aufnehmen kann.

Hier sind die einzelnen Behälter 1400 mit Gehäuse ausgestattet, die auf beiden grossen Seitenflächen ausgeschnitten sind, da gemäss den vorstehend geschilderten Ausführungsformen an diesen Stellen funktionell kein Material benötigt wird; dies dient der Materialersparnis. Endplatten 1402 können solche Serien von ausgeschnittenen Gehäusen ästhetisch ansprechend abschliessen.

An ihren Oberkanten 1404 weisen die Gehäuse der Behälter 1400 je eine Schiene 1405 mit hinterschnittenem Profil, etwa T-Profil wie in Fig. 61 dargestellt, auf, und eine Traverse 1406 hat zu diesem Profil komplementär ausgebildete Ausschnitte 1410 in den freien Schenkeln ihres U-förmigen Querschnitts. Die Teilseitenansicht nach Fig. 63 lässt erkennen, dass in die Traverse eine Blattfeder 1408 eingelegt ist, die sich über die gesamte Traversenlänge erstreckt und dafür sorgt, dass trotz des toleranzbedingten Spiels zwischen den T-Schienen und den Ausschnitten 1410 die Behälter einigermassen fest sitzen. – Fig. 62 zeigt eine Abwandlung der Traverse, die hier um ein Winkelstück 1412 ergänzt ist, mittels dem die Traverse an der Wand anschraubbar ist.

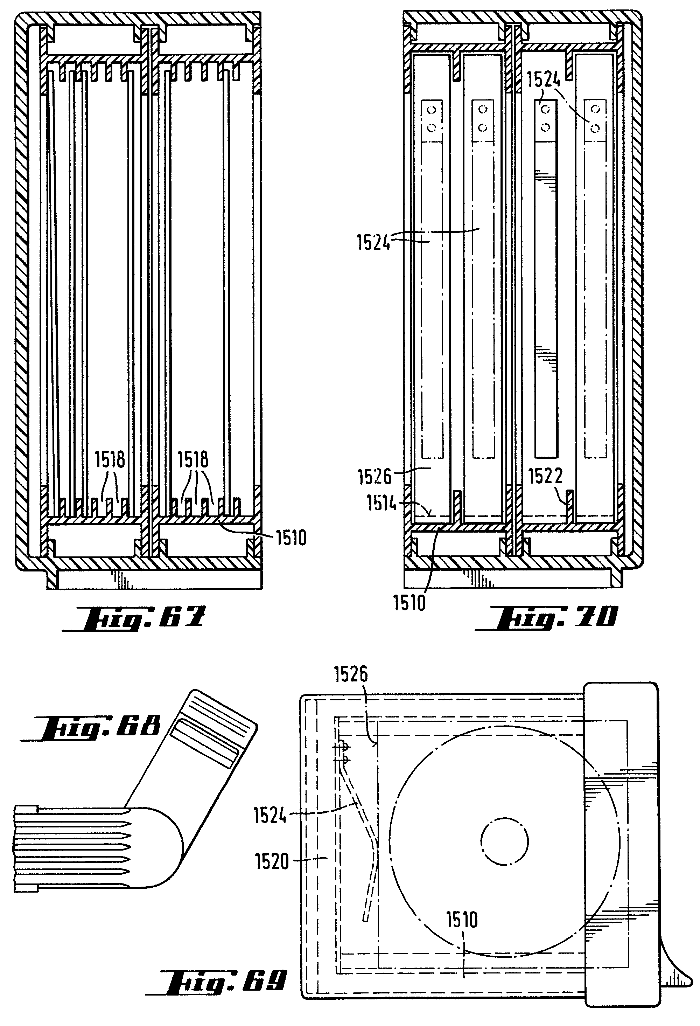

Die Fig. 64 bis 70 zeigen Abwandlungen insbesondere des Schiebers zur Aufnahme von anderen Aufzeichnungsträgern, nämlich sogenannte Compact-Discs. Die Schiebersohle 1510 weist entweder einen frontseitigen Nocken 1512 und einen rückseitigen Nocken 1514 auf oder aber, wie in Fig. 65 als Alternative dargestellt, schlitzartige Einsenkungen 1516, deren Kontur – wie in Fig. 65 erkennbar – wannen- oder muldenförmig ist. Zwischen den Nocken 1512 und 1514 bzw. den Einsenkungen 1516 sind Rillen 1518 vorgesehen, welche das Einschieben der Compactdiscs erleichtern. Wenn eine grössere Anzahl von Compactdiscs dicht nebeneinander in dem Schieber untergebracht sind, wie dies in Fig. 67 verdeutlicht wird, ist es für den Benutzer gegebenenfalls schwierig, eine gewünschte «disc» mit seinen Fingerspitzen zu erfassen. Aus diesem Grunde ist die Konstruktion so getroffen, dass der Benutzer die benachbart zu der von ihm gewünschten liegenden Scheiben nach hinten wegdrücken kann (sh. Fig. 66). Der Abstand der Rückwand von der Position von Nocken 1514 bzw. hinterer Begrenzung des Schlitzes 1516 ist so bemessen, dass der Schwerpunkt der «discs» sich noch immer innerhalb des von den Nocken 1512 und 1514 begrenzten Bereichs bzw. innerhalb des Bereichs über dem Schlitz 1516 befindet, so dass die zurückgedrückten «discs» unter Schwerkraftwirkung wieder in ihre Ruheposition zurückkehren können. Alternativ kann man an der Rückwand 1520 eine Feder anbringen, die die «discs» in ihre Ausgangsposition zurückdrückt: Siehe schematische Darstellung in Fig. 69, wo die Feder 1524 erkennbar ist.

Fig. 67 bzw. 70 zeigen Teilquerschnitte von Behältern mit zwei unterschiedlichen Typen von Schiebern, von denen Fig. 67 eine Ausführung zeigt, bei der die insoweit erläuterte, aber bei Fig. 70 dagegen anstelle von Führungsrillen 1518, Nockenpaaren 1512, 1514 bzw. Einsenkungen 1516 Trennlappen 1522 vorgesehen sind, die jeweils eine Kammer für eine Aufbewahrungsschachtel oder Verkaufspackung 1526 jeweils einer einzelnen Compactdisc begrenzen. Wie zuvor, kann man auch hier eine Feder vorsehen, die die jeweils nicht zu entnehmende Packung in die Speicherposition zurückdrückt, nachdem die gewünschte Packung entnommen worden ist; diese Feder ist wie in Fig. 69 in Fig. 70 mit 1524 angedeutet.

Die Fig. 71 bis 80 beziehen sich auf weitere Varianten des Behälters zur Aufbewahrung von scheibenförmigen Datenträgern, wobei der Einhachheit halber hier wieder auf Compactdiscs bezuggenommen wird.

Fig. 71 zeigt einen solchen Behälter im schematisch dargestellten Längsschnitt, und zwar geschlossen. Im Gehäuse 1601 ist gleitbeweglich der Schieber 1602 aufgenommen, an den um ein Gelenk 1603 schwenkbar ein Tor 1604 angelenkt ist. In dem Gelenk ist, ähnlich wie bei oben erläuterten Ausführungsformen, eine Schenkelhalsfeder untergebracht, die das Tor in die weggeschwenkte Öffnungsposition vorspannt, deren Winkellage durch einen Anschlag 1605 bestimmt ist. Die Gleitkopplung mit dem Gehäuse erfolgt über eine Teleskopführung, damit der Schieber praktisch vollständig aus dem Gehäuse ausfahren kann; demgemäss ist noch eine Zwischenschiene 1606 auf beiden Seiten vorgesehen. Der maximale Auszugsweg der Zwischenschiene wird durch einen Anschlagnocken 1616 festgelegt, der in einem Gehäuseschlitz läuft. Rippen 1615 des Gehäuses umgreifen beide Schienenaussenkanten und halten so die Schienen im Gehäuse, die ihrerseits mit ähnlichen Profilhaken den Schieber umgreift. Dies ist am besten in der Querschnittdarstellung nach Fig. 72 erkennbar.

Schieber 1602 nebst Tor 1604 werden von Druckfedern 1607 aus dem Gehäuse herausgestossen, sobald durch Fingerdruck auf die Taste 1608 in Richtung des Pfeiles 1609 der Sperrhaken 1610 (vgl. Fig. 74) aus einer Falle herausgehoben wird, die als Gehäusedurchbruch ausgebildet ist.

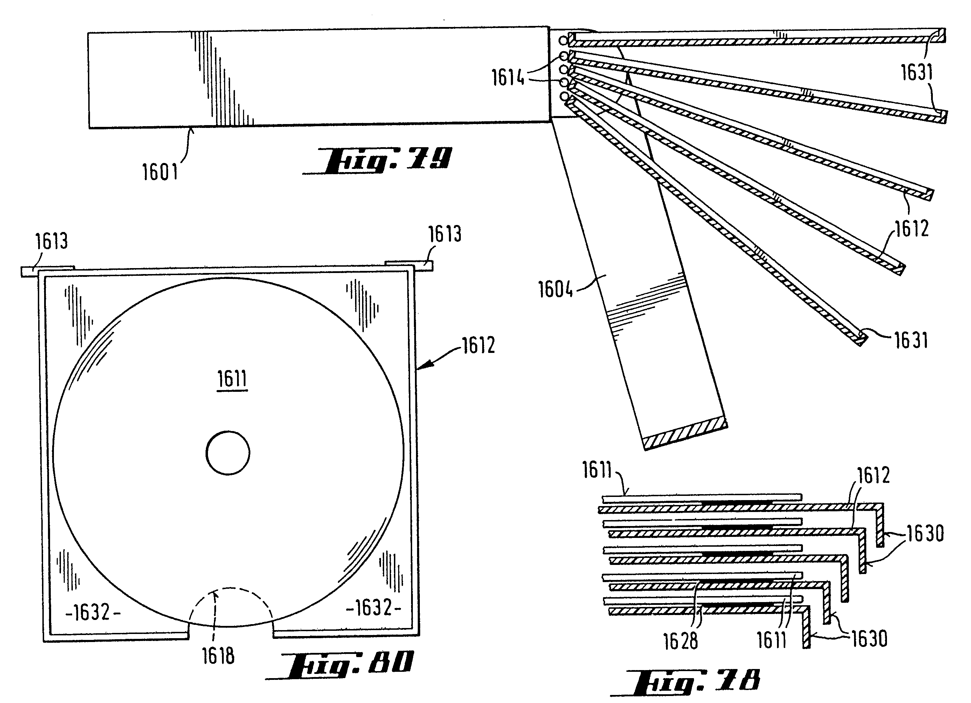

Die Compactdiscs 1611 liegen einzeln in Plattenteilen 1612, die mittels Zapfen 1613 an den Schieber angelenkt sind und so um Achsen 1614 schwenken können. Eine alternative Gelenkverbindung zwischen den Plattenteilen 1612 und dem Schieber 1602 ist in Fig. 76 in Draufsicht, in Fig. 77 in Ansicht dargestellt: Die Endkante des Plattenteils weist einfach angespritzte Schnappkrallen 1623 auf, die beim Aufsetzen auf an den Schieber angespritzte Zapfen 1622 aufspreizen und danach ein Gelenk bilden. – Während Fig. 71 eine erste Ausführungsform eines solchen Plattenteils erkennen lässt, zeigt Fig. 75 eine Variante, die sich von jener durch einen versteifenden Umfangsrand 1617, der nur an der vorderen Entnahmeseite des Plattenteils weggelassen ist. Die Plattenteile weisen an der Entnahmeseite einen Griffausschnitt 1618 auf und in ihrem Zentrum einen Vorsprung 1619, welcher verhindert, dass bei abruptem Öffnen, wenn man also nach Druck auf die Taste 1608 loslässt und die Federn 1607 voll wirken lässt, die so beschleunigten Compactdiscs 1611 ausgeworfen werden. Die Einstecktiefe der discs wird begrenzt durch eine Anschlagleiste 1620.

Fig. 74 zeigt in schematisierter Seitenansicht den geöffneten Behälter. Die Plattenteile werden dabei aufgefächert, und zwar durch Zusammenwirken des schwenkenden Tors 1604 mit den Plattenteilen. Das Tor trägt nämlich nach innen ragende Zapfen 1624, die von unten an Lappen 1626 der Plattenteile 1612 stossen und sie anheben. Die Lappen sind lang genug, dass die Zapfen 1624 trotz des Entlanggleitens an diesen wegen der unterschiedlichen Achsabstände stets im Eingriff mit ihnen bleiben. Beim Zurückschwenken des Tores wirken von oben ebenfalls an das Tor angeformte weitere Zapfen 1625 auf die Lappen und bringen sie in die Parallellage zurück, falls die Schwerkraft nicht ausreicht oder der Behälter nicht in der gezeichneten Position benutzt wird; das Tor könnte dann mit seiner Frontplatte 1627 an dem ihm nächstliegenden Plattenteil anstossen, oder die Plattenteile könnten untereinander kollidieren. Alternativ könnte die Rückstellung der Plattenteile in ihre Parallellage auch durch Vorspannfedern oder andere Mittel bewirkt werden. – Das unterste Plattenteil bleibt ohnehin in seiner Ausgangslage, abgestützt auf die Anschläge 1629.

Anstelle des Sicherungsnockens 1619 könnte man auch auf den Plattenteilen Haftbeläge anbringen, wie bei 1628 in Fig. 78 angedeutet. Die dort gezeichneten Plattenteile weichen auch sonst von denen der zuvor beschriebenen Ausführungsform ab; ihre entnahmeseitige Front ist mit abgewinkelten Beschriftungs- oder Etikettenflächen 1630 versehen, die einander in der Aufbewahrungsposition überdecken (Fig. 78), jedoch im aufgefächerten Entnahmezustand gut lesbar sind, wie man leicht erkennt.

Die Variante nach Fig. 79 stellt eine Ausführungsform dar, bei der die Plattenteile nicht nach oben, sondern nach unten auffächern (immer unter der Voraussetzung, dass die zeichnerisch dargestellte Lage auch die Gebrauchslage ist). Damit die discs nicht herunterfallen, ist ein Anschlagrand 1631 vorgesehen. Diese Ausführungsform hat den Vorteil, dass die Einsicht in den Fächer günstiger sein kann als bei der zuvor geschilderten Ausführungsform, insbesondere auf die Randpartien 1632 der Plattenteile (Fig. 80), die hier als Beschriftungs- oder Etikettenfelder gedacht sind.

Abgesehen von den Bauteilen, die ständig elastisch vorgespannt sind, wie die Federn 1607, sind alle Bauteile vorzugsweise als Kunststoffspritzteile ausgebildet. Wie an sich bekannt, können die Aussenseiten der Gehäuse 1601 mit Ansätzen und Ausnehmungen komplementärer Profilgestaltung versehen sein, damit gleichartige Behälter formschlüssig zu grösseren Einheiten verbunden werden können.

**Patentansprüche**

1. Behälter zum Aufbewahren von Magnetbandkassetten (610, 825, 1036), Kompaktschallplatten (1526, 1611) oder anderen Aufzeichnungsträgern mit einem an einer Schmalseite offenen Gehäuse (30, 120, 200, 900, 500, 614, 800, 1110, 1210, 1601) und einem im Gehäuse beweglich geführten Transportschieber (40, 210, 902, 508, 600, 700, 801, 1112, 1212, 1310, 1602) sowie mit einer Auswerfefeder (48, 218, 916, 504, 1607), die den Schieber nach manueller Freigabe in eine für die Entnahme des Aufbewahrungsgutes bestimmte Entnahmeposition fördert, wobei der Behälter eine Frontplatte (74, 232, 920, 518, 602, 704, 802, 841, 920, 1016, 1116, 1216, 1330, 1604) aufweist, die bei eingeschobenem Schieber die Gehäuseöffnung verschliesst, dadurch gekennzeichnet, dass die Frontplatte mit dem Schieber um eine gegenüber der Frontplattenebene in das Gehäuse hinein versetzte Achse schwenkbar verbunden ist und dass Mittel (76, 608, 1020, 1114; 708, 710) vorgesehen sind, um auf die Frontplatte ein Drehmoment auszuüben, das diese in eine Drehlage verschwenkt, die das Entnehmen des Aufbewahrungsgutes in Ausschubrichtung des Schiebers ermöglicht.

2. Behälter nach Anspruch 1, dadurch gekennzeichnet, dass die Frontplatte (74, 232, 920, 518, 602, 704, 802, 841, 920, 1016, 1116, 1216, 1330, 1604) um eine zur längeren Seite der Gehäuseöffnung parallele Achse schwenkbar ist.

3. Behälter nach Anspruch 1, dadurch gekennzeichnet, dass an die Frontplatte (74, 232, 920, 518, 602, 704, 802, 841, 920, 1016, 1116, 1216, 1330, 1604) abgewinkelte Plattenteile (82, 517, 942, 1014) anschliessen, die mit ihr eine etwa U-förmige Baugruppe bilden und an den Schieber (40, 210, 902, 508, 600, 700, 801, 1112, 1212, 1310, 1602) angelenkt sind.

4. Behälter nach Anspruch 1, dadurch gekennzeichnet, dass an die Frontplatte ein abgewinkeltes Plattenteil (602') anschliesst, das mit ihr eine im Querschnitt etwa L-förmige Baugruppe bildet und dessen der Frontplatte abgewandte Endkante an den Schieber (600) angelenkt ist.

5. Behälter nach einem oder mehreren der vorangehenden Ansprüche, dadurch gekennzeichnet, dass die Mittel eine Feder (76, 608, 1020, 1114) umfassen.

6. Behälter nach Anspruch 5, dadurch gekennzeichnet, dass die Feder als Schraubenfeder (76, 608, 1020, 1114) ausgebildet ist.

7. Behälter nach einem oder mehreren der vorangehenden Ansprüche, dadurch gekennzeichnet, dass die Endlagen der Frontplatten-Schwenkbewegung durch einerseits am Schieber, andererseits an der Frontplatte vorgesehene Anschläge (72/88) definiert sind.

8. Behälter nach einem der Ansprüche von 1 bis 6, dadurch gekennzeichnet, dass die Endlagen der Frontplatten-Schwenkbewegung durch einerseits am Gehäuse, andererseits an der Frontplatte vorgesehene Anschläge definiert sind (602' in Fig. 28).

9. Behälter nach Anspruch 1, dadurch gekennzeichnet, dass die Mittel als Zwangssteuermittel ausgebildet sind, die zwischen der Frontplatte und dem Gehäuse angeordnet sind (708, 710 in Fig. 30).

10. Behälter nach Anspruch 5 oder 6, dadurch gekennzeichnet, dass die Feder (76, 608, 1020, 1114) im Bereich der Frontplatten-Schwenkachse angeordnet ist.

11. Behälter nach einem oder mehreren der vorangehenden Ansprüche, dadurch gekennzeichnet, dass die Frontplatte (602') und der Schieber (600) aus Kunststoff gespritzt sind und mittels eines aus Kunststoff gespritzten Filmgelenks (604) miteinander verbunden sind.

12. Behälter nach Anspruch 3 oder 4, dadurch gekennzeichnet, dass sich die Schwenkachse der Baugruppe in der Entnahmeposition des Schiebers vor der Gehäusefront befindet.

13. Behälter nach Anspruch 12, dadurch gekennzeichnet, dass die Baugruppe innerhalb des Gehäuses längs dessen Wandung geführt ist.

14. Behälter nach einem oder mehreren der vorangehenden Ansprüche, dadurch gekennzeichnet, dass die Entnahmeposition des Schiebers durch am Gehäuse bzw. Schieber ausgebildete, ineinandergreifende Anschläge bzw. Gegenanschläge definiert ist.

15. Behälter nach einem oder mehreren der vorangehenden Ansprüche, dadurch gekennzeichnet, dass der Schieber längs Gehäuseseitenwänden geführt ist.

16. Behälter nach Anspruch 15, dadurch gekennzeichnet, dass die Führungen an das Gehäuse angeformte Schienen (42, 214/220, 514, 820) umfassen.

17. Behälter nach Anspruch 15 oder 16, dadurch gekennzeichnet, dass die Führungen an den Schieber angeformte Schienen (44, 212, 512, 912, 822, 1604) umfassen.

18. Behälter nach Anspruch 14 und 15, dadurch gekennzeichnet, dass die Anschläge und Gegenanschläge im Bereich der Führungen ausgebildet sind.

19. Behälter nach Anspruch 1, dadurch gekennzeichnet, dass eine Verriegelungsanordnung an einer Frontplattenbaugruppe angeformt ist, die einen mit der Frontplatte verbundenen, sich bei eingeschobenem Schieber parallel zu dessen Ausschubrichtung erstreckenden Bodenabschnitt umfasst.

20. Behälter nach Anspruch 19, dadurch gekennzeichnet, dass die Verriegelungsanordnung einen federnd auslenkbaren Riegel umfasst.

21. Behälter nach Anspruch 19, dadurch gekennzeichnet, dass die Verriegelungsanordnung eine relativ zu der Frontplatte bewegliche Riegelbaugruppe umfasst.

22. Behälter nach Anspruch 21, dadurch gekennzeichnet, dass die Riegelbaugruppe quer zur Bewegungsrichtung der Frontplatte beweglich ist.

23. Behälter nach Anspruch 21 oder 22, dadurch gekennzeichnet, dass an der Frontplatte eine Entriegelungstaste angeordnet ist, die mit einem in eine gehäuseseitige Falle einrastbaren Riegel in Wirkverbindung steht.

24. Behälter nach Anspruch 23, dadurch gekennzeichnet, dass die Entriegelungstaste nahe einem Ende der Frontplatte angeordnet ist.

25. Behälter nach einem der Ansprüche 19 bis 24, dadurch gekennzeichnet, dass der Verriegelungsanordnung in einer Gehäuseseitenwandung eine Falle zugeordnet ist, in die ein Riegel einrastbar ist.

26. Behälter nach Anspruch 1 für Kompaktschallplatten und andere flach-runde Aufzeichnungsträger, gekennzeichnet durch Zentriermittel zum Festlegen der Position des Aufzeichnungsträgers in dem Behälter (Fig. 65).

27. Behälter nach Anspruch 1, gekennzeichnet durch ein reibungsschlüssig an dem aufbewahrten Aufzeichnungsträger anliegendes Dämpfungselement (106 in Fig. 2).

28. Behälter nach einem der vorangehenden Ansprüche, dadurch gekennzeichnet, dass er mit weiteren, gleichen Behältern formschlüssig stapelbar ist.

29. Behälter nach Anspruch 4, dadurch gekennzeichnet, dass der Schieber eine sich über die gesamte Breite der lichten Gehäuseöffnung erstreckende Bodenfläche aufweist.

30. Behälter nach Anspruch 16, gekennzeichnet durch an das Gehäuse angeformte Führungsschienen für den Schieber, denen Führungseinschnitte seitlich im Schieber zugeordnet sind (220, 222 in Fig. 16).

31. Behälter nach Anspruch 1, gekennzeichnet durch eine Verriegelungsanordnung, die derart aufgebaut ist, dass sich der Schieber durch Einschub in das Gehäuse selbsttätig verriegelt und durch weiteren Einschub wieder entriegelt (924, 926 in Fig. 21–23).

32. Behälter nach einem der vorangehenden Ansprüche, dadurch gekennzeichnet, dass der Schieber eine den Aufbewahrungsträger rückseitig abstützende Wandung aufweist.

33. Behälter nach Anspruch 9, dadurch gekennzeichnet, dass die Frontplatte in einer Gehäusekulisse geführte Steuernocken für die Zwangssteuerung ihrer Bewegung relativ zu dem Schieber aufweist (708, 710 in Fig. 30).

34. Behälter nach Anspruch 11 und 20, dadurch gekennzeichnet, dass der gesamte Schieber einschliesslich des federnd auslenkbaren Riegels einstückig aus Kunststoff gespritzt ist.

35. Behälter nach Anspruch 39, dadurch gekennzeichnet, dass auch eine Entriegelungstaste einstückig mit dem Schieber und dem Riegel ausgebildet ist.

36. Behälter nach Anspruch 1, dadurch gekennzeichnet, dass die Auswerffeder eine auf die der Gehäuseöffnung abgewandte Endkante des Aufzeichnungsträgers einwirkende, ihn in eine Entnahmeposition vorspannende Blattfeder ist.

37. Behälter nach Anspruch 36, dadurch gekennzeichnet, dass die Blattfeder einseitig eingespannt ist und mit ihrem anderen, freien Ende auslenkbar ist.

38. Behälter nach Anspruch 1, dadurch gekennzeichnet, dass der Schieber (40, 210, 902, 508, 600, 700, 801, 1112, 1212, 1310, 1602) rahmenförmig ist mit Plattenteilen (54, 212, 514, 831), die sich im wesentlichen über die Tiefe des Gehäuses (30, 120, 200, 900, 500, 614, 800, 1110, 1210, 1601) erstrecken und nahe der der Gehäuseöffnung gegenüberliegenden Gehäuserückwand (36, 206, 502) durch eine Querplatte (46, 216, 506, 828) verbunden sind und an die eine Frontplattenbaugruppe (74, 232, 920, 518, 602, 704, 802, 841, 920, 1016, 1216, 1330, 1604) angelenkt ist.

39. Behälter nach Anspruch 1, dadurch gekennzeichnet, dass die Frontplatte (74, 232, 518, 602, 1116, 1216, 1604) als Entriegelungsorgan für den Schieber (40, 210, 508, 600, 1112, 1212, 1602) ausgebildet ist.

40. Behälter nach einem oder mehreren der vorangehenden Ansprüche, dadurch gekennzeichnet, dass er an die grössten Abmessungen des Aufbewahrungsgutes angepasste Innenmasse aufweist und dass Ausgleichselemente zum Abstützen von Aufbewahrungsgut kleinerer Abmessungen vorgesehen sind (260–268 in Fig. 14–16; 400, 400' in Fig. 25/26; 1316 in Fig. 55–60).

41. Behälter nach einem der vorangehenden Ansprüche, dadurch gekennzeichnet, dass für mehrere Schieber ein gemeinsames Gehäuse vorgesehen ist (120 in Fig. 10; 130 in Fig. 13).

42. Behälter nach Anspruch 1, dadurch gekennzeichnet, dass auf der dem Behälterinnern abgewandten Aussenseite der Frontplatte übereinander eine Entriegelungstaste (90, 244, 804, 1028) und ein Etikettenaufnahmefach (96, 803, 1024) angeordnet sind.

43. Behälter nach Anspruch 1 oder 41, dadurch gekennzeichnet, dass in mindestens einem aller in dem Gehäuse untergebrachten Schieber ein Schloss eingebaut ist (888 in Fig. 37).

44. Behälter nach Anspruch 1 oder 41, dadurch gekennzeichnet, dass jeder Schieber (1510, 1602) zur Aufnahme mehrerer Aufzeichnungsträger (1526, 1611) ausgebildet ist, wobei diese einzeln entnehmbar und wieder einlegbar sind.

45. Behälter nach Anspruch 44, dadurch gekennzeichnet, dass der Schieber (1510) eine der Anzahl der unterbringbaren Aufzeichnungsträger entsprechende Anzahl von Aufnahmefächern (1516, 1518) aufweist, aus denen die Aufzeichnungsträger (1526) bei Entnahme eines derselben verdrängbar sind und in die sie dann selbsttätig zurückkehren.

46. Behälter nach Anspruch 44, dadurch gekennzeichnet, dass der Schieber (1602) eine der Anzahl der unterbringbaren Aufzeichnungsträger (1611) entsprechende Anzahl von Aufnahmeorganen (1612) aufweist, die bei Wegbewegen der Frontplatte (1604) in der ausgeschobenen Position des Schiebers relativ zueinander aufspreizbar sind.

47. Behälter nach Anspruch 46, dadurch gekennzeichnet, dass die Aufnahmeorgane (1612) tellerartig ausgebildet sind und an den Schieber angelenkt sind, und dass mit der Frontplatte (1604) Steuerorgane (1624) verbunden sind, die ein Auffächern der in der Aufbewahrungsposition dicht gepackt liegenden tellerartigen Aufnahmeorgane zwangssteuern.

## Claims

1. A container for storing magnetic tape cassettes (610, 825, 1036), compact discs (1526, 1611) or other recording media, having a housing (30, 120, 200, 900, 500, 614, 800, 1110, 1210, 1601) open on one narrow side and a transport slider member (40, 210, 902, 508, 600, 700, 801, 1112, 1212, 1310, 1602) movably guided in the housing, and having an ejector spring (48, 218, 916, 504, 1607) which, after manual release, conveys the slider member into a removal position intended for the removal of the article being stored, wherein the container has a front plate (74, 232, 920, 518, 602, 704, 802, 841, 920, 1016, 1116, 1216, 1330, 1604) which closes the housing opening when the slider member is pushed in, characterised in that the front plate is connected to the slider member so that it is pivotable about an axis offset inwards into the housing with respect to the plane of the front plate, and that means (76, 608, 1020, 1114; 708, 710) are provided to exert on the front plate a turning moment which pivots the latter into a rotated position which permits the removal, in the direction of the outward movement of the slider member, of the article being stored.

2. A container according to Claim 1, characterised in that the front plate (74, 232, 920, 518, 602, 704, 802, 841, 920, 1016, 1116, 1216, 1330, 1604) is pivotable about an axis parallel to the longer side of the housing opening.

3. A container according to Claim 1, characterised in that adjoining the front plate (74, 232, 920, 518, 602, 704, 802, 841, 920, 1016, 1116, 1216, 1330, 1604) there are angled plate portions (82, 517, 942, 1014) which form with the latter an approximately U-shaped assembly and are hinged onto the slider member (40, 210, 902, 508, 600, 700, 801, 1112, 1212, 1310, 1602).

4. A container according to Claim 1, characterised in that adjoining the front plate there is an angled plate portion (602') which forms with the latter an assembly which is approximately L-shaped in cross section and which has its end edge remote from the front plate hinged onto the slider member (600).

5. A container according to one or more of the preceding Claims, characterised in that the means comprise a spring (76, 608, 1020, 1114).

6. A container according to Claim 5, characterised in that the spring is in the form of a helical spring (76, 608, 1020, 1114).

7. A container according to one or more of the preceding Claims, characterised in that the end positions of the pivoting movement of the front plate are defined by means of stop members (72, 88) provided on the one hand on the slider member and on the other hand on the front plate.

8. A container according to one of Claims 1 to 6, characterised in that the end positions of the pivoting movement of the front plate are defined by means of stop members (602' in Fig. 28) provided on the one hand on the housing and on the other hand on the front plate.

9. A container according to Claim 1, characterised in that the means are in the form of positive-acting control means which are arranged between the front plate and the housing (708, 710 in Fig. 30).

10. A container according to Claim 5 or 6, characterised in that the spring (76, 608, 1020, 1114) is arranged in the region of the pivoting axis of the front plate.

11. A container according to one or more of the preceding Claims, characterised in that the front plate (602') and the slider member (600) are injection-moulded from plastics material and are connected to each other by means of an integral hinge (604) injection-moulded from plastics material.

12. A container according to Claim 3 or 4, characterised in that in the removal position of the slider member the pivot axis of the assembly is situated in front of the housing front.

13. A container according to Claim 12, characterised in that the assembly is guided inside the housing along the wall of the latter.

14. A container according to one or more of the preceding Claims, characterised in that the slider member removal position is defined by means of interlocking stop members and complementary stop members formed respectively on the housing and the slider member.

15. A container according to one or more of the preceding Claims, characterised in that the slider member is guided along side walls of the housing.

16. A container according to Claim 15, characterised in that the guides comprise rails (42, 214/ 220, 514, 820) moulded onto the housing.

17. A container according to Claim 15 or 16, characterised in that the guides comprise rails (44, 212, 512, 912, 822, 1604) moulded onto the slider member.

18. A container according to Claims 14 and 15, characterised in that the stop members and complementary stop members are formed in the region of the guides.

19. A container according to Claim 1, characterised in that a locking arrangement is moulded onto a front plate assembly which comprises a floor section connected to the front plate and extending parallel to the direction of outward movement of the slider member when the latter is pushed in.

20. A container according to Claim 19, characterised in that the locking arrangement comprises a resiliently deflectable latch.

21. A container according to Claim 19, characterised in that the locking arrangement comprises a latch assembly movable relative to the front plate.

22. A container according to Claim 21, characterised in that the latch assembly is movable at right-angles to the direction of movement of the front plate.

23. A container according to Claim 21 or 22, characterised in that on the front plate there is arranged an unlocking button which has an effective connection with a latch that can be engaged in a catch in the housing.

24. A container according to Claim 23, characterised in that the unlocking button is arranged near one end of the front plate.

25. A container according to one of Claims 19 to 24, characterised in that with the locking arrangement there is associated, in a side wall of the housing, a catch in which a latch can be engaged.

26. A container according to Claim 1 for compact discs and other flat-round recording media, characterised by centring means to fix the position of the recording medium in the container (Fig. 65).

27. A container according to Claim 1, characterised by a damping element (106 in Fig. 2) resting with a frictional connection against the recording medium being stored.

28. A container according to one of the preceding Claims, characterised in that it can be stacked to interlock with further similar containers.

29. A container according to Claim 4, characterised in that the slider member has a floor surface extending over the full inside width of the housing opening.

30. A container according to Claim 16, characterised by guide rails for the slider member which are moulded onto the housing and with which lateral guide recesses in the slider member are associated (220, 222 in Fig. 16).

31. A container according to Claim 1, characterised by a locking arrangement which is so constructed that the slider member is automatically locked by being pushed into the housing and unlocked again by a further push (924, 926 in Figs. 21–23).

32. A container according to one of the preceding Claims, characterised in that the slider member has a wall supporting the storage carrier at the back.

33. A container according to Claim 9, characterised in that the front plate has control projections guided in a slide channel in the housing for positive-acting control of its movement relative to the slider member (708, 710 in Fig. 30).

34. A container according to Claim 11 and 20, characterised in that the entire slider member, including the resiliently deflectable latch, is injection-moulded in one piece from plastics material.

35. A container according to Claim 39, characterised in that an unlocking button is also constructed in one piece with the slider member and the latch.

36. A container according to Claim 1, characterised in that the ejector spring is a leaf spring acting on the end edge, remote from the housing opening, of the recording medium and biasing it into a removal position.

37. A container according to Claim 36, characterised in that the leaf spring is fixed in at one end and is deflectable with its other, free end.

38. A container according to Claim 1, characterised in that the slider member (40, 210, 902, 508, 600, 700, 801, 1112, 1212, 1310, 1602) is frame-like, with plate portions (54, 212, 514, 831) which extend substantially over the depth of the housing (30, 120, 200, 900, 500, 614, 800, 1110, 1210, 1601) and are connected near the rear wall (36, 206, 502) of the housing situated opposite to the housing opening by means of a transverse plate (46, 216, 506, 828), and onto which there is hinged a front plate assembly (74, 232, 920, 518, 602, 704, 802, 841, 920, 1016, 1216, 1330, 1604).

39. A container according to Claim 1, characterised in that the front plate (74, 232, 518, 602, 1116, 1216, 1604) is constructed as an unlocking member for the slider member (40, 210, 508, 600, 1112, 1212, 1602).

40. A container according to one or more of the preceding Claims, characterised in that it has internal dimensions matched to the maximum dimensions of the article being stored and that compensating elements are provided to support articles of smaller dimensions being stored (260–268 in Figs. 14–16; 400, 400' in Figs. 25/26; 1316 in Figs. 55–60).

41. A container according to one of the preceding Claims, characterised in that a common housing is provided (120 in Fig. 10; 130 in Fig. 13) for several slider members.

42. A container according to Claim 1, characterised in that on the outside, remote from the inside of the container, of the front plate an unlocking button (90, 244, 804, 1028) and a compartment to receive a label (96, 803, 1024) are arranged one above the other.

43. A container according to Claim 1 or 41, characterised in that a lock (888 in Fig. 37) is built into at least one of all the slider members accommodated in the housing.

44. A container according to Claim 1 or 41, characterised in that each slider member (1510, 1602) is constructed to receive several recording media (1526, 1611), it being possible to remove and reinsert the latter individually.

45. A container according to Claim 44, characterised in that the slider member (1510) has a number of compartments (1516, 1518) corresponding to the number of recording media that can be housed, from which compartments the recording media (1526) can be displaced during removal of one of them and into which they then return automatically.

46. A container according to Claim 44, characterised in that the slider member (1602) has a number of receiving members (1612) corresponding to the number of recording media (1611) that can be housed, which receiving members, when the front plate (1604) is moved away, in the position in which the slider member is pushed out, can be pushed apart from each other.

47. A container according to Claim 46, characterised in that the receiving members (1612) are plate-like in construction and are hinged onto the slider member, and that the front plate (1604) has connected to it control members (1624) which positively control a fanning-out of the plate-like receiving members which are closely packed together in the storage position.

**Revendications**

1. Boîte pour le stockage de cassettes à bande magnétique (610, 825, 1036), de disques compacts (1526, 1611) ou d'autres supports d'enregistrement, et comportant un logement (30, 120, 200, 900, 500, 614, 800, 1110, 1210, 1601) ouvert sur un petit côté, et un coulisseau de transport (40, 210, 902, 508, 600, 700, 801, 1112, 1212, 1310, 1602) guidé de manière à être déplaçable dans le logement, ainsi qu'un ressort d'éjection (48, 210, 916, 504, 1607), qui entraîne le coulisseau, après la libération manuelle, dans une position de prélèvement permettant le prélèvement du matériel stocké, la boîte comportant une plaque avant (74, 232, 920, 518, 602, 704, 802, 841, 920, 1016, 1116, 1216, 1330, 1604) qui ferme l'ouverture du logement lorsque le coulisseau est dans la position enfoncée, caractérisée en ce que la plaque avant est reliée au coulisseau de façon à pouvoir pivoter autour d'un axe décalé à l'intérieur du logement par rapport au plan de la plaque avant, en ce qu'il est prévu des moyens (76, 608, 1020, 1114; 708, 710) permettant d'exercer sur la plaque avant un couple de rotation, qui amène par pivotement la plaque avant dans une position pivotée qui permet le prélèvement du matériel stocké, dans la direction de sortie du coulisseau vers l'extérieur.

2. Boîte selon la revendication 1, caractérisée en ce que la plaque avant (74, 232, 920, 518, 602, 704, 802, 841, 920, 1016, 1116, 1216, 1330, 1604) peut pivoter autour d'un axe parallèle au côté le plus long de l'ouverture du logement.

3. Boîte selon la revendication 1, caractérisée en ce qu'à la plaque avant (74, 232, 920, 518, 602, 704, 802, 841, 920, 1016, 1116, 1216, 1330, 1604) se raccordent des éléments de plaque coudés (82, 517, 942, 1014), qui forment avec la plaque avant un module approximativement en forme de U et sont articulés sur le coulisseau (40, 210, 902, 508, 600, 700, 801, 1112, 1212, 1310, 1602).

4. Boîte selon la revendication 1, caractérisée en ce qu'à la plaque avant se raccorde un élément de plaque coudé (602'), qui forme avec la plaque avant un module possédant approximativement la forme d'un L en coupe transversale et dont le bord terminal, tourné à l'opposé de la plaque avant, est articulé sur le coulisseau (600).

5. Boîte selon une ou plusieurs des revendications précédentes, caractérisée en ce que les moyens comprennent un ressort (76, 608, 1020, 1114).

6. Boîte selon la revendication 5, caractérisée en ce que le ressort est réalisé sous la forme d'un ressort hélicoïdal (76, 608, 1020, 1114).

7. Boîte selon l'une ou plusieurs des revendications précédentes, caractérisée en ce que les positions extrêmes du déplacement de pivotement de la plaque avant sont définies par des butées (72/88) prévues d'une part sur le coulisseau et d'autre part sur la plaque avant.

8. Boîte selon l'une des revendications 1 à 6, caractérisée en ce que les positions d'extrémité du mouvement de pivotement de la plaque avant sont définies par des butées (602' sur la figure 28) prévues d'une part sur le logement et d'autre part sur la plaque avant.

9. Boîte selon la revendication 1, caractérisée en ce que les moyens sont réalisés sous la forme de moyens de commande forcée, qui sont disposés entre la plaque avant et le logement (708, 710 sur la figure 30).

10. Boîte selon la revendication 5 ou 6, caractérisée en ce que le ressort (76, 608, 1020, 1114) est disposée dans la zone de l'axe de pivotement de la plaque avant.

11. Boîte selon une ou plusieurs des revendications précédentes, caractérisée en ce que la plaque avant (602') et le coulisseau (600) sont réalisés par moulage par injection en matière plastique et sont reliés entre eux au moyen d'une articulation en forme de pellicule (604) moulée par injection d'une matière plastique.

12. Boîte selon la revendication 3 ou 4, caractérisée en ce que, lorsque le coulisseau est dans la position correspondant au prélèvement, l'axe de pivotement du module est situé en avant de la face avant du logement.

13. Boîte selon la revendication 12, caractérisée en ce que le module est guidé à l'intérieur du logement, le long des parois de ce dernier.

14. Boîte selon une ou plusieurs des revendications précédentes, caractérisé en ce que la position du coulisseau, correspondant au prélèvement, est définie par des butées et des butées antagonistes, qui sont prévues sur le logement et sur le coulisseau et qui s'interpénètrent.

15. Boîte selon une ou plusieurs des revendications précédentes, caractérisée en ce que le coulisseau est guidé le long de parois latérales du logement.

16. Boîte selon la revendication 15, caractérisée en ce que les guides comportent des rails (42, 214/220, 514, 820) formés par façonnage sur le logement.

17. Boîte selon la revendication 15 ou 16, caractérisée en ce que les guides comportent des rails (44, 212, 512, 912, 822, 1604) formés par façonnage sur le coulisseau.

18. Boîte selon les revendications 14 et 15, caractérisée en ce que les butées et les butées antagonistes sont prévues dans la zone des guides.

19. Boîte selon la revendication 1, caractérisée en ce que sur un module de la plaque avant se trouve formé par façonnage un dispositif de verrouillage qui comporte un élément de fond relié à la plaque avant et qui s'étend, lorsque le coulisseau est rentré, parallèlement à la direction d'extraction de ce dernier.

20. Boîte selon la revendication 19, caractérisée en ce que le dispositif de verrouillage comporte un verrou pouvant être écarté élastiquement.

21. Boîte selon la revendication 19, caractérisée en ce que le dispositif de verrouillage comporte un module formant verrou déplaçable par rapport à la plaque avant.

22. Boîte selon la revendication 21, caractérisée en ce que le module formant verrou est déplaçable transversalement par rapport à la direction de déplacement de la plaque avant.

23. Boîte selon la revendication 21 ou 22, caractérisée en ce que sur la plaque avant se trouve disposée une touche de déverrouillage qui est reliée de façon active par un verrou pouvant être encliqueté dans une cavité ménagée dans le logement.

24. Boîte selon la revendication 23, caractérisée en ce que la touche de déverrouillage est disposée à proximité d'une extrémité de la plaque avant.

25. Boîte selon l'une des revendications 19 à 24, caractérisée en ce qu'au dispositif de verrouillage se trouve associée, dans une paroi latérale du logement, une cavité dans laquelle un verrou peut s'encliqueter.

26. Boîte selon la revendication 1 pour des disques compacts et d'autres supports d'enregistrement plats circulaires, caractérisée par des moyens de centrage permettant de fixer la position du support d'enregistrement dans la boîte (figure 65).

27. Boîte selon la revendication 1, caractérisée par un organe d'amortissement (106 sur la figure 2) appliqué selon une liaison par frottement sur le support d'enregistrement stocké.

28. Boîte selon l'une des revendications précédentes, caractérisée en ce qu'elle peut être empilée avec d'autres boîtes identiques selon une liaison par formes complémentaires.

29. Boîte selon la revendication 4, caractérisée en ce que le coulisseau possède une surface inférieure qui s'étend sur toute la largeur de l'ouverture libre du logement.

30. Boîte selon la revendication 16, caractérisée par des rails de guidage prévus pour le coulisseau, qui sont formés par façonnage dans le logement et auxquels sont associés, latéralement dans le coulisseau, des encoches de guidage (220, 222 sur la figure 16).

31. Boîte selon la revendication 1, caractérisée par un dispositif de verrouillage qui est agencé de telle sorte que le coulisseau se verrouille automatiquement dans le logement lorsqu'on l'y enfonce et se déverrouille à nouveau lors d'un enfoncement supplémentaire (924, 926 sur les figures 21–23).

32. Boîte selon l'une des revendications précédentes, caractérisée en ce que le coulisseau possède une paroi soutenant le support d'enregistrement sur son côté arrière.

33. Boîte selon la revendication 9, caractérisée en ce que la plaque avant comporte des cames de commande, qui sont guidées dans une coulisse du logement et sont prévues pour le guidage forcé du déplacement de la plaque par rapport au coulisseau (708, 710 sur la figure 30).

34. Boîte selon les revendications 11 et 20, caractérisée en ce que l'ensemble du coulisseau, y compris le verrou pouvant être écarté élastiquement, sont moulés par injection d'un seul tenant en une matière plastique.

35. Boîte selon la revendication 29, caractérisée en ce qu'une touche de verrouillage est également réalisée d'un seul tenant avec le coulisseau et le verrou.

36. Boîte selon la revendication 1, caractérisée en ce que le ressort d'éjection est un ressort à lame qui agit sur le bord terminal, tourné à l'opposé de l'ouverture du logement, du support d'enregistrement et précontraint ce dernier dans une position de prélèvement.

37. Boîte selon la revendication 36, caractérisée en ce que le ressort à lame est fixé par serrage d'un côté, tandis que son autre extrémité libre peut être fléchie.

38. Boîte selon la revendication 1, caractérisée en ce que le coulisseau (40, 210, 902, 508, 600, 700, 801, 1112, 1212, 1310, 1602) possède la forme d'un cadre et comporte des éléments de plaque (54, 212, 514, 831), qui s'étendent essentiellement sur toute la profondeur du logement (30, 120, 200, 900, 500, 614, 800, 1110, 1210, 1601) et sont reliés entre eux par une plaque transversale (46, 216, 506, 828) à proximité de la paroi arrière (36, 206, 502) du logement, qui est située à l'opposé de l'ouverture du logement et sur lesquels est articulé un module de la plaque avant (74, 232, 920, 518, 602, 704, 802, 841, 920, 1016, 1216, 1330, 1604).

39. Boîte selon la revendication 1, caractérisée en ce que la plaque avant (74, 232, 518, 602, 1116, 1216, 1604) est réalisée sous la forme d'un organe de déverrouillage pour le coulisseau (40, 210, 508, 600, 1112, 1212, 1602).

40. Boîte selon l'une des revendications précédentes, caractérisée en ce qu'elle comporte des dimensions intérieures adaptées aux dimensions maximales du matériel à stocker et en ce qu'il est prévu des organes d'équilibrage (260–268 sur les figures 14–16; 400, 400′ sur les figures 25/26; 1316 sur les figures 55–60) pour le soutien d'un matériel de stockage possédant des dimensions inférieures.

41. Boîte selon l'une des revendications précédentes, caractérisée en ce qu'il est prévu un boîtier commun (120 sur la figure 10; 130 sur la figure 13) pour plusieurs coulisseaux.

42. Boîte selon la revendication 1, caractérisée en ce qu'une touche de déverrouillage (90, 244, 804, 1028) et un casier récepteur pour étiquettes (96, 803, 1024) sont disposés, en étant superposés, sur la face extérieure tournée à l'opposé de l'intérieur de la boîte.

43. Boîte selon la revendication 1 ou 41, caractérisée en ce qu'un verrou (888 sur la figure 37) est inséré dans au moins un de l'ensemble des coulisseaux présents dans le logement.

44. Boîte selon la revendication 1 ou 41, caractérisée en ce que chaque coulisseau (1510, 1602) est réalisé de manière à loger plusieurs supports d'enregistrement (1526, 711), ces derniers pouvant être retirés individuellement et être à nouveau insérés individuellement.

45. Boîte selon la revendication 44, caractérisée en ce que le coulisseau (1510) possède un nombre, correspondant au nombre des supports d'enregistrement devant être logés, de casiers récepteurs (1516, 1518), hors desquels les supports d'enregistrement (1526) peuvent être refoulés lors du prélèvement de l'un d'eux et dans lesquels ils peuvent ensuite être amenés automatiquement.

46. Boîte selon la revendication 44, caractérisée en ce que le coulisseau (1602) possède un nombre, correspondant au nombre des supports d'enregistrement (1611) devant être logés, d'organes de réception (1612), qui peuvent être écartés les uns par rapport aux autres lors du mouvement d'écartement de la plaque avant (1604), lorsque le coulisseau est dans la position ressortie.

47. Boîte selon la revendication 46, caractérisée en ce que les organes de réception (1612) sont réalisés en forme de plateaux et sont articulés sur le coulisseau et en ce qu'à la plaque avant (704) sont raccordés des organes de commande (1624) qui réalisent une commande forcée d'un étalement des organes de réception en forme de plateaux, qui sont entassés de façon dense dans la position de stockage.

Fig.1

Fig.2

Fig.3

**Fig. 4**

**Fig. 5**

Fig. 6

Fig. 7

Fig. 9

Fig. 8

**Fig.10**

**Fig.11**

**Fig.12**

Fig.13

Fig. 15

Fig. 16

Fig. 14

**Fig.15a**

76 234

244

238

232

204

236

**Fig.15b**

236 76

234

**Fig.17**

**Fig.18**

202

248

17

246

208

232'

234,236

212

204

202

248

246

208

246

244 216

222
220

212
214

18

208

204 234,236

*Fig. 17a*

*Fig. 18a*

**Fig.19**

**Fig.20**

_Fig. 21_

_Fig. 22_

_Fig. 22a_

_Fig. 23_

*Fig.24*

*Fig.24a*

Fig. 25

Fig. 27

Fig. 26

_Fig. 29_

616

612

602'

606

608

604

602

604

618

600

_Fig. 28_

616

602

612

602'

608 612

614

604

608

618

602'

604

600

610

616

Fig. 30

Fig. 32

807 807 807

805

806 806

805

814 812 814

Fig. 31

803 803 803 803 803

804 804 804 804 804

800

815

805

802 802 802 802

↑ 32

Fig. 33

805 809 810 805

Fig. 34

## Fig. 35

**_Fig. 36_**

*Fig. 37*

*Fig. 39*

*Fig. 38*

Fig.42

Fig.43

Fig.40

Fig.41

0 086 275

0 086 275

**Fig. 4·5**

**Fig. 4·4**

**Fig. 46**

-1034-

1036

1022

1016

1020

1018

-1014-

-1024-

1032

-1012-

-1010-

1030

1028

1030

1014' 1040

1022

1042

1028

-1010-

**Fig. 47**

1026

**Fig. 48**

1026

**Fig. 49**

1110

_Fig. 50_

1116

1112

1112

1116

1112

1110

1118

1116

1114

1110

_Fig. 51_

Fig.52

Fig.53

Fig.54

1210
1212
1214
1216
1218
1220
1222

*Fig.55*

*Fig.58*

*Fig.59*

*Fig.60*

1314

1310

1324

1344  1344

1312

1316

1340

1316

1324

1318

1344

1322

1322

1318

1334

1336

0 086 275

67

0 086 275

**Fig:56**

55

1314

1326

1310

1312

1316

1322

1328

1338    1336

55    1316    1310

**Fig:57**

Fig. 62

Fig. 63

Fig. 61

Fig. 64

Fig. 65

Fig. 66

**Fig. 67**

**Fig. 68**

**Fig. 69**

**Fig. 70**

_Fig:72_

_Fig:73_

_Fig:71_

*Fig: 25*

*Fig: 26*

*Fig: 27*

*Fig: 24*

0 086 275

Fig. 79

Fig. 78

Fig. 80